# EUROPEAN PATENT SPECIFICATION

(11) **EP 2 230 599 B1**
(45) Date of publication and mention of the grant of the patent: **11.11.2015**
(21) Application number: 10250307.5
(22) Date of filing: 22.02.2010
(51) Int. Cl.: G06F 9/46, G06F 13/10

(54) **Information processing apparatus**
Informationsverarbeitungsvorrichtung
Appareil de traitement d'informations

(30) Priority: 17.03.2009 JP 2009065259
(43) Date of publication of application: 22.09.2010
(73) Proprietor: Ricoh Company, Ltd., Tokyo 143-8555 (JP)
(72) Inventor: Takahashi, Hisanori, Ohta-ku Tokyo 143-8555 (JP); Soyama, Takashi, Ohta-ku Tokyo 143-8555 (JP); Nakamura, Soichi, Ohta-ku Tokyo 143-8555 (JP)
(74) Representative: Mounteney, Simon James

(56) References cited:
- EP-A1- 1 760 584
- US-A1- 2003 159 044
- US-A1- 2006 221 372
- US-A1- 2007 038 313
- US-A1- 2007 050 050
- US-A1- 2007 164 855
- US-A1- 2007 208 827
- US-A1- 2007 299 889
- US-B1- 6 717 689

## Description

### BACKGROUND OF THE INVENTION

### Field of the Invention

The present invention relates to an information processing apparatus that updates a setting value.

### Description of the Related Art

Conventionally, a method of transferring a setting of a first device to a second device by exporting setting values set in the first device and importing the setting values to the second device is known. This method is useful when introducing a plurality of devices and setting the same setting values collectively to the devices, or when transferring the setting content of an old device to a new device when the old device is replaced by the new device. For example, Japanese Patent Application Laid-open No. 2004-178602 discloses a technology for importing the content of a document. Japanese Patent Application Laid-open No. 2003-219132 discloses a technology for importing an address book. Japanese Patent Application Laid-open No. 2004-112181 discloses a technology for importing an individual color managing table that stores a pair of color specifying information of an input image that needs an individual color conversion and conversion color information from an external storage device.

However, for example, in a multifunction peripheral (MFP), values unique to a device such as an engine adjusting value and a network adjusting value are present. When these values are set into a different type of device, the device may not operate normally, which is problematic.

The preset invention is achieved in view of the above, and it is an object of the present invention to provide an information processing apparatus that does not cause a trouble in that a device in which a setting value is newly set does not operate correctly when a setting value of a predetermined device is set to another device, an information processing method, and a program.

### SUMMARY OF THE INVENTION

It is an object of the present invention to at least partially solve the problems in the conventional technology.

According to an aspect of the present invention there is provided an information processing apparatus that performs information processing by using a plurality of setting values, the apparatus including an identification information storing unit that stores therein device identification information for identifying the information processing apparatus; a setting value storing unit that stores therein various setting values used in the information processing apparatus and unique information that indicates whether the setting value is a device eigenvalue that cannot be set to a device different from the information processing apparatus, in an associated manner; a file obtaining unit that obtains a setting information file that includes various setting values and the device identification information; a comparing unit that compares the device identification information included in the setting information file and the device identification information stored in the identification information storing unit; and a setting value updating unit that updates a setting value other than the device eigenvalue among the setting values stored in the setting value storing unit to a setting value stored in the setting information file, when the device identification information included in the setting information file does not match the device identification information stored in the identification information storing unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration of an MFP according to a first embodiment;
FIG. 2 is a diagram schematically illustrating a data structure of a user storing unit;
FIG. 3 is a class diagram of setting definition data stored in a setting definition storing unit;
FIG. 4 is a diagram schematically illustrating a data structure of the setting definition data stored in the setting definition storing unit;
FIG. 5 is a diagram schematically illustrating another data structure of one of the setting definition data stored in the setting definition storing unit;
FIG. 6 is a flowchart illustrating export processing;
FIG. 7 is a sequence diagram illustrating details of login processing (Step S100) explained with reference to FIG. 6;
FIG. 8 is a sequence diagram illustrating details of setting value extracting processing (Step S102) explained with reference to FIG. 6;
FIG. 9 is a diagram illustrating a category selecting screen;
FIG. 10 is a sequence diagram illustrating details of authority judging processing (Step S104) explained with reference to FIG. 6;
FIG. 11 is a sequence diagram illustrating details of the export processing (Step S106) explained with reference to FIG. 6;
FIG. 12 is a diagram schematically illustrating a data structure of a setting information file generated in the export processing;
FIG. 13 is a flowchart illustrating import processing of the setting information file;
FIG. 14 is a sequence diagram illustrating details of setting information file readout processing (Step S202) explained with reference to FIG. 13;
FIG. 15 is a sequence diagram illustrating details of device ID comparing processing (Step S204) explained with reference to FIG. 13;
FIG. 16 is a flowchart illustrating details of setting value update processing (Step S206) explained with reference to FIG. 13;
FIG. 17 is a class diagram of setting definition data stored in a setting definition storing unit according to a second embodiment;
FIG. 18 is a diagram schematically illustrating a data structure of the setting information file output from an MFP according to the second embodiment;
FIG. 19 is a flowchart illustrating setting value update processing by the MFP according to the second embodiment;
FIG. 20 is a diagram illustrating information specifications stored in a device ID storing unit of the MFP as an import destination;
FIG. 21 is a diagram schematically illustrating a data structure of an update result file created by the setting value update processing; and
FIG. 22 is a block diagram illustrating a hardware configuration of the MFP according to the first and second embodiments.

### DETAILED DESCRIPTION OF THE PREFERRED EMBODIMENTS

Exemplary embodiments of an information processing apparatus, an information processing method, and a program according to the present invention are explained in detail below with reference to the accompanying drawings.

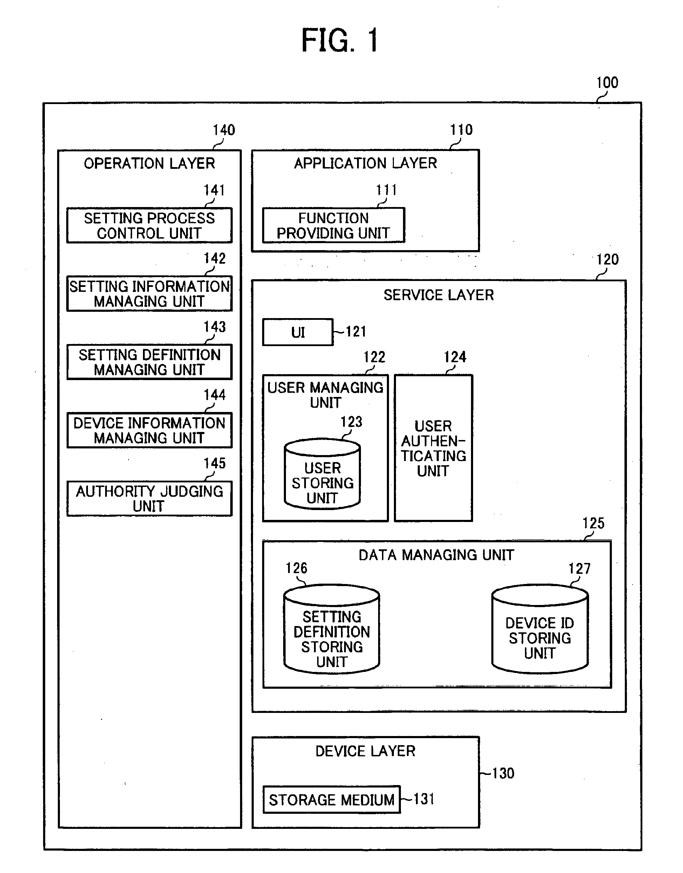

FIG. 1 is a block diagram illustrating a configuration of an MFP 100 as an information processing apparatus according to a first embodiment. The MFP 100 includes an application layer 110, a service layer 120, a device layer 130, and an operation layer 140. The MFP 100 creates a setting information file including setting values set in the MFP 100 and outputs (exports) it to the outside. Moreover, the MFP 100 obtains (imports) the setting information file created in a different MFP and updates each setting value in the MFP 100 with the setting values included in the obtained setting information file.

The application layer 110 includes a function providing unit 111. The application layer 110 stores therein various applications for a user utilizing the MFP 100, and the function providing unit 111 instructs the service layer 120 to perform processing as needed and obtains a result of the processing by the applications stored in the application layer 110.

The service layer 120 includes an application program interface (API) that enables to receive a processing request from each application of the application layer 110.

The service layer 120 includes a user interface (UI) 121, a user managing unit 122, a user authenticating unit 124, and a data managing unit 125. The UI 121 receives input from a user. The UI 121 also provides various information to a user. Specifically, the UI 121 is an operation panel including a display screen. The UI 121 corresponds to a user-identification-information obtaining unit, a readout receiving unit, a change receiving unit, a selection receiving unit, and a display unit.

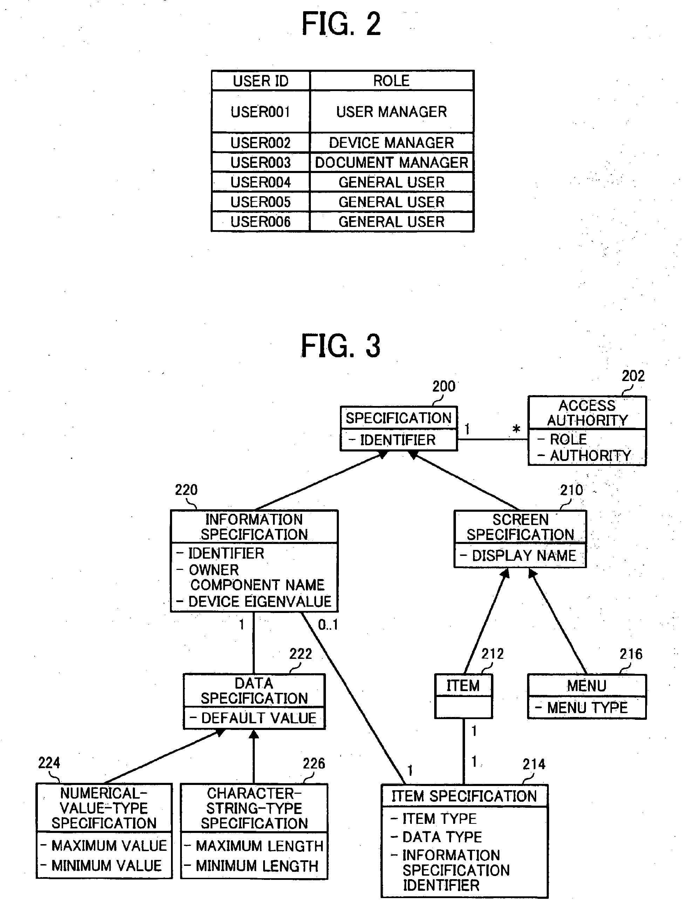

The user managing unit 122 includes a user storing unit 123. The user storing unit 123 stores therein user information. FIG. 2 is a diagram schematically illustrating a data structure of the user storing unit 123. The user authenticating unit 124 stores therein a user ID for identifying a user and a role of the user in an associated manner. The role is information indicating presence or absence of an authority for access, rewriting, and the like to various setting values. The degree of access restriction to the setting value is different depending on the role. The user authenticating unit 124 performs a user authentication by comparing the user ID obtained from a user via the UI 121 and the user ID stored in the user storing unit 123. Specifically, when the two IDs match, the user authenticating unit 124 judges that the user authentication succeeds, and when the two IDs do not match, the user authenticating unit 124 judges that the user authentication fails.

The data managing unit 125 includes a setting definition storing unit 126, and manages setting definition data as data needed for creating a setting screen. The setting definition data is information in which various specifications are associated with the setting values to be set to the specifications, and includes a screen specification related to the display screen and an information specification related to the setting value. In the information specification, the setting value is specifically stored while being associated with a setting value ID for identifying the setting value. The data managing unit 125 further includes a device ID storing unit 127. The device ID storing unit 127 stores therein a device ID for identifying the MFP 100. As another example, the device ID is identification information for identifying a model of the MFP 100, and the like. The setting definition storing unit 126 and the device ID storing unit 127 correspond to a setting value storing unit and an identification information storing unit, respectively.

The device layer 130 includes a storage medium 131, and performs control of a device such as the storage medium 131 included in the MFP 100 in accordance with an instruction from the service layer 120.

The operation layer 140 includes a setting process control unit 141, a setting information managing unit 142, a setting definition managing unit 143, a device information managing unit 144, and an authority judging unit 145.

The setting process control unit 141 receives a request for import or export of the setting value from a user via the UI 121. The setting process control unit 141 instructs the setting information managing unit 142 to perform processing corresponding to the received request. The setting information managing unit 142 requests a specification of the setting value to be imported or exported from the setting definition managing unit 143. The setting information managing unit 142 corresponds to a comparing unit, a setting value updating unit, a setting range comparing unit, a data type comparing unit, an application comparing unit, an editing unit, a creating unit, an output unit, and a file obtaining unit. The setting definition managing unit 143 refers to the setting definition storing unit 126 in accordance with the request from the setting information managing unit 142. The device information managing unit 144 manages information on a device such as the device ID of the MFP 100. The authority judging unit 145 judges the authority of a user who performs input/output to/from the UI 121. The authority includes a plurality of authorities such as the authority for export of the setting information of the MFP 100 and the authority for editing the setting value. The authority judging unit 145 corresponds to a first authority judging unit and a second authority judging unit.

FIG. 3 is a class diagram of the setting definition data stored in the setting definition storing unit 126. The setting definition data is written, for example, in XLM format. The setting definition data includes a specification class 200, an access authority class 202, a screen specification class 210, an item class 212, a menu class 216, an information specification class 220, a data specification class 222, a numerical-value-type specification class 224, and a character-string-type specification class 226.

As shown in FIG. 3, a rectangle of each class includes sections of two stages, specifically, a name section indicating a class name and an attribute section indicating data (attribute) included in the class from above. For example, in the rectangle indicating the specification class 200, the name section indicates that the class name of the class is "specification" and the attribute section indicates that the attribute included in the class is "identifier".

Next, each class is explained. The specification class 200 represents various specifications in the MFP 100. The specification class 200 includes the identifier as an attribute. The identifier is the attribute for identifying the specification (the screen specification or the information specification). In the case of the information specification, the identifier is an information specification identifier. The identifier is described in a hierarchical structure. For example, the identifier "machine.mail" identifies the specification of the lower hierarchy than the specification identified with the identifier "machine".

The access authority class 202 is a class that manages an access authority for an item defined in the specification. The access authority class 202 includes the role and the authority as an attribute. Specifically, the role is a role, such as a general user and a document manager, explained with reference to FIG. 2. The authority indicates an authority allowed for each role. Specifically, as described above, the authority includes the export of the setting value and the editing of the setting value.

The screen specification class 210 is a class that manages the screen specification. The screen specification class 210 includes a display name as an attribute. The display name is a display name representing an item defined in the screen specification. In other words, the display name is displayed on the display screen.

The item class 212 is a class that manages an item defined in the screen specification. An item specification class 214 is a class that manages an item specification. The item specification class 214 includes an item type, a data type, and the information specification identifier as an attribute. The item type is a type (for example, an input type or a selection type) of the item to be displayed. The data type is information indicating whether the setting value as the data type of the item specification is a numerical value type or a character string type. Moreover, the information specification identifier is an attribute that specifies the information specification.

The menu class 216 is a class that manages a menu type of the screen specification. The menu class 216 includes the menu type as an attribute. The menu type is a type of a menu of the screen specification.

The information specification class 220 is a class that manages the information specification. The information specification class 220 includes an identifier, an owner component name, and a device eigenvalue as an attribute. The identifier is an attribute that identifies the information specification class. The device eigenvalue is information indicating whether a corresponding setting value is a value unique to a device, i.e., the device eigenvalue. The device eigenvalue can be a different value for each device, and can be a different value for each model as another example.

The data specification class 222 is a class that manages the setting value as data about the information specification. Specifically, the data specification class 222 includes a default value as an attribute. The default value is a default value of the setting value defined in the information specification. In the present embodiment, explanation is given for a case where the default value of the setting value is imported or exported as the setting value.

The numerical-value-type specification class 224 is a class that manages a range of a numerical value that can be input as the setting value. The numerical-value-type specification class 224 includes a maximum value and a minimum value of the setting value as an attribute. The maximum value is a maximum value that can be set as the setting value. The minimum value is a minimum value that can be set as the setting value.

The character-string-type specification class 226 is a class that manages a range of a character string that can be input to the setting value. The character-string-type specification class 226 includes a maximum length and a minimum length as an attribute. The maximum length is a maximum length of the character string that can be set. The minimum length is a minimum length of the character string that can be set.

Next, the relationship between the classes shown in FIG. 3 is explained. As shown in FIG. 3, a straight line connecting the rectangles indicating the classes indicates that there is a relationship between the classes at both ends, and a character and a number near both ends of the straight line indicate a role and a multiplicity of the classes, respectively. The role is a role or a position of one class when viewing the class from the other class at both ends of the straight line. The multiplicity is a correspondence relationship of the number of objects created from the classes at both ends of the straight line.

The access authority class 202 has a role of managing the access authority of each specification defined by the specification class 200. The information specification class 202 and the screen specification class 210 are classes inheriting the specification class 200. Moreover, the item specification class 214 that is associated with the item class 212, which inherits the screen specification class 210, is associated with the information specification class 220 on one-to-one basis. The association is performed by using the information specification identifier. Whereby, an item to be displayed and detailed information in the item can be associated with each other. The detailed information is attribute information necessary for a component performing processing by using a value set to the item by a user.

The setting definition storing unit 126 according to the present embodiment collectively stores therein items of the setting screen and detailed information necessary for performing processing that utilizes the items. Moreover, the setting definition storing unit 126 stores therein a screen transition until the setting screen including an item is displayed and an identifier indicating a hierarchy of an item in each display screen in an associated manner for each item. Whereby, the setting screen displaying an item and a hierarchy in the setting screen can be specified.

Then, addition, update, or deletion of an item displayed on the setting screen and detailed information for each item can be performed by performing addition, update, or deletion of an entry with respect to the setting definition storing unit 126. Moreover, inconsistency between items can be prevented by collectively managing items and detailed information by the setting definition storing unit 126. Furthermore, because the screen specifications and the information specifications utilized in a plurality of setting screens are collectively managed by the setting definition storing unit 126, inconsistency in the content caused between a plurality of specifications can be prevented.

Moreover, in the setting definition storing unit 126, the screen specifications and the information specifications utilized in a plurality of setting screens are collectively stored after applying them to the class structure shown in FIG. 3, so that access to each item can be controlled in accordance with a consistent policy.

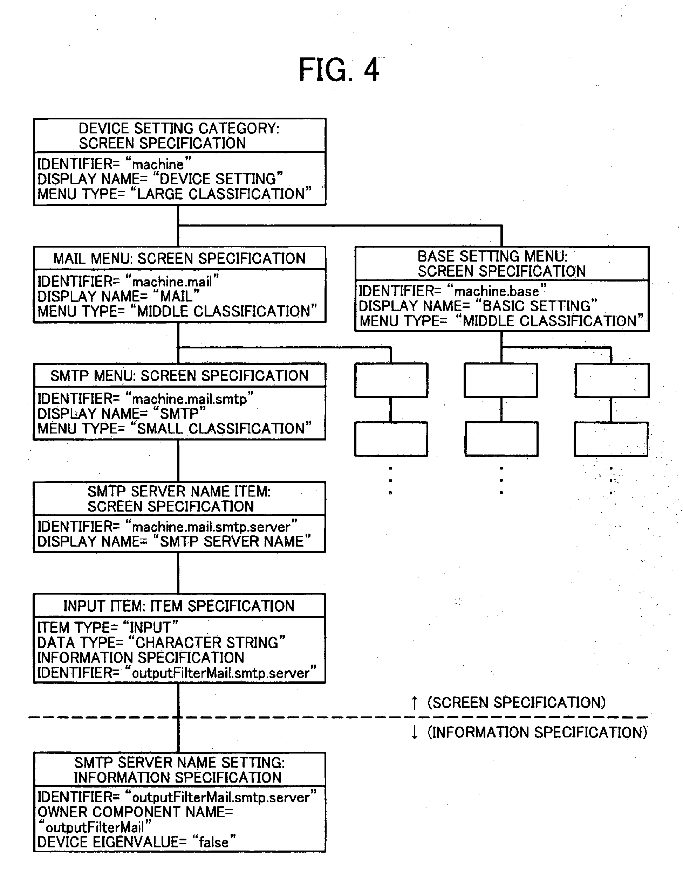

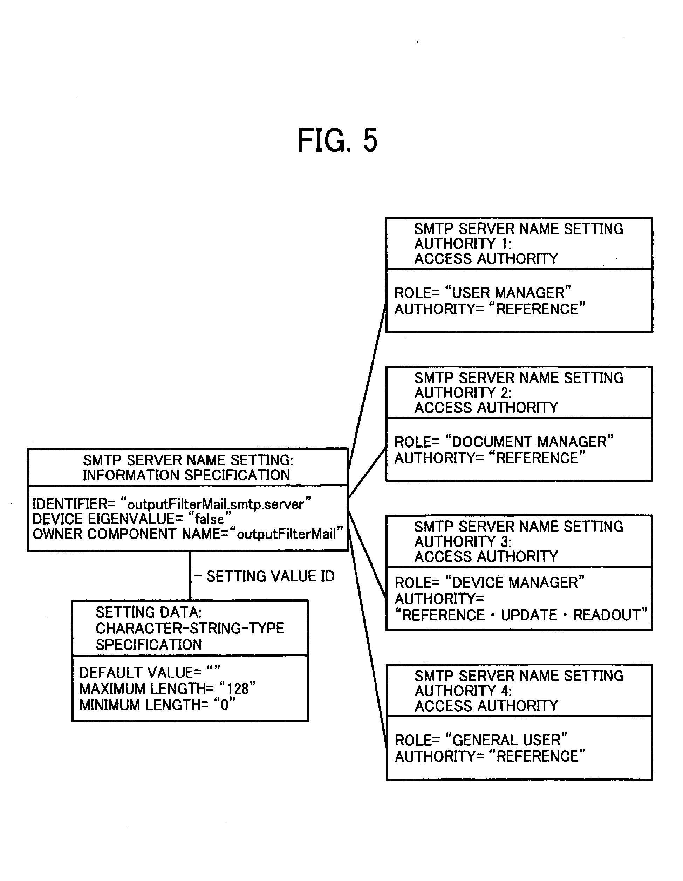

FIGS. 4 and 5 are diagrams each schematically illustrating a data structure of the setting definition data stored in the setting definition storing unit 126. FIG. 4 illustrates the screen specifications and the information specification as specifications related to device setting. The screen specifications are further classified into a large classification, a middle classification, and a small classification, and an item and an item specification are associated with respect to the small classification. Moreover, the item specification is associated with the information specification. The screen specification includes the identifier, the display name, and the menu type. The item includes the identifier and the display name. The item specification includes the item type, the data type, and the information specification identifier. The information specification includes the identifier, the owner component name, and information indicating whether the setting value is the device eigenvalue.

The identifier of the medium classification is obtained by adding the identifier that identifies the medium classification to the identifier of the large classification. For example, the identifier "machine.mail" of "mail menu" is obtained by adding the identifier "mail" of "mail menu" to the identifier "machine" of "device setting category" that is the upper class of this screen specification, i.e., the large classification. In this manner, the identifiers of the specifications that belong to the same classification include a common identifier. Therefore, for example, if it is required to search for all of the screen specifications of the small classification belonging to the large classification "device setting", it is sufficient to perform a prefix search with "machine" as a search term. Whereby, all of the screen specifications of the small classification belonging to the large classification "device setting", such as "machine.mail", "machine.mail.smtp", and "machine.base" that include "machine" as the identifier, are hit.

In this manner, because all of the setting items included in the large classification are associated with the large classification of the screen specification, all of the setting items belonging to the large classification can be specified by specifying the large classification.

Moreover, each item specification includes the information specification identifier to be associated with the information specification. In an example shown in FIG. 4, the item specification "input item" includes the identifier "outputFilterMail.smtp.server" of the information specification "SMTP server name setting".

Furthermore, as shown in FIG. 5, the setting definition storing unit 126 stores therein a character string type specification with respect to the information specification. The character string type specification includes a default value, a maximum length, and a minimum length of setting data. The information specification and the character string type specification are associated with each other by the setting value ID for identifying the setting value. The setting definition storing unit 126 further stores therein the access authorities while being associated with the information specification. In an example shown in FIG. 5, "SMTP server name setting authority 1" has the role "user manager" and the authority "reference". This indicates that a user having the role of the user manager has the authority of reference. Moreover, "SMTP server name setting authority 3" has the role "device manager" and the authority "reference/update/readout". This indicates that a user having the role of the device manager has the authority of reference, update, and readout. In this manner, the access authorities different for each role are set with respect to one information specification.

The authority includes reference, readout, and update. In the case of including the authority for reference, the content of the setting value can be browsed. In the case of including the authority for readout, the setting value of a corresponding specification can be exported to the outside. In the case of including the authority for update, when the setting value of a corresponding specification is imported from the outside, the setting value that is already set can be updated to the setting value imported from the outside. In this manner, it is possible to prevent an unauthorized access to and an unauthorized rewriting to the setting value by setting a plurality of authorities.

The role according to the present embodiment corresponds to the user identification information. In the present embodiment, because the authority differs depending on the role of a user, the user ID and the role are associated with each other in the user information of the user storing unit 123 and the authority is associated not with the user ID but with the role in the setting definition data to set the authority for each role. However, as another example, in the setting definition data, it is possible to associate the user ID with the authority to set the authority for each user.

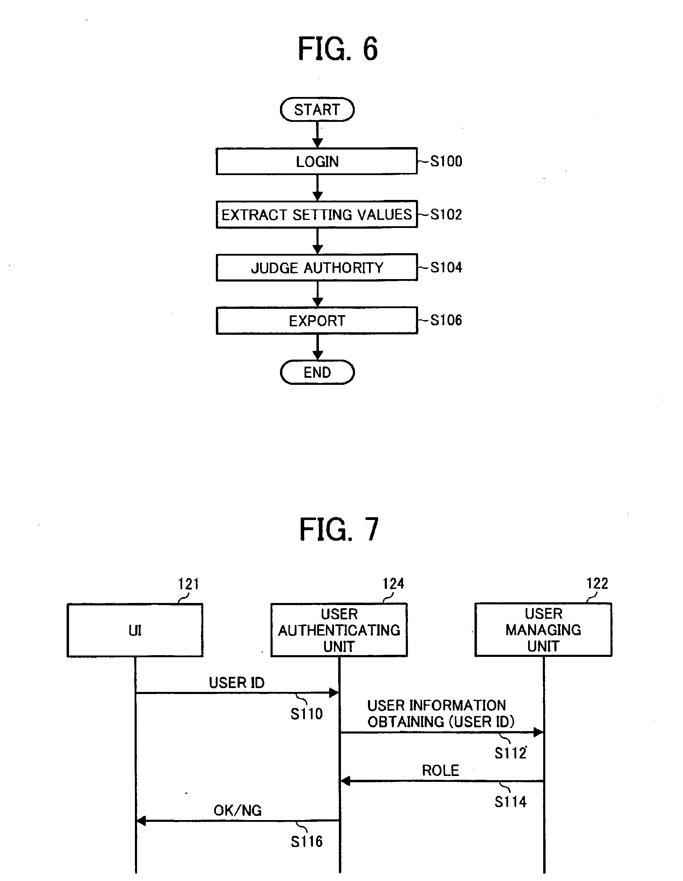

FIG. 6 is a flowchart illustrating export processing of creating the setting information file including various setting values set in the MFP 100 and exporting it. First, when the user ID is input by a user via the UI 121, the user authenticating unit 124 performs login processing (Step S100). Next, when an export instruction is input from the user via the UI 121, the setting information managing unit 142 extracts the setting values set in the MFP 100, i.e., the setting values stored in the setting definition storing unit 126 (Step S102). Next, the authority of the user who performs the export processing of the setting values is judged (Step S104). Then, the setting information file is created and is exported to the outside (Step S106). Each processing is explained in detail below with reference to FIG. 7 and subsequent drawings.

FIG. 7 is a sequence diagram illustrating details of the login processing (Step S100) explained with reference to FIG. 6. First, when the user ID is input to the UI 121 by a user, the UI 121 sends the user ID to the user authenticating unit 124 (Step S110). The user authenticating unit 124 requests the user managing unit 122 to obtain the user information together with the user ID (Step S112). The user managing unit 122 refers to the user storing unit 123, specifies the role associated with the obtained user ID, and sends the specified role to the user authenticating unit 124 (Step S114). When the user authenticating unit 124 receives the role from the user managing unit 122, the user authenticating unit 124 judges that the authentication succeeds. When the user authenticating unit 124 does not receive the role from the user managing unit 122, that is, when the user ID has not been registered in the user storing unit 123, the user authenticating unit 124 judges that the authentication succeeds. The user authenticating unit 124 sends information indicating whether the authentication succeeds (OK/NG) to the UI 121 based on the response from the user managing unit 122 (Step S116). The UI 121 displays the result of the authentication on the display screen. With the above processing, the login processing completes. In the login processing, when the authentication fails, the processing ends without performing the subsequent processing.

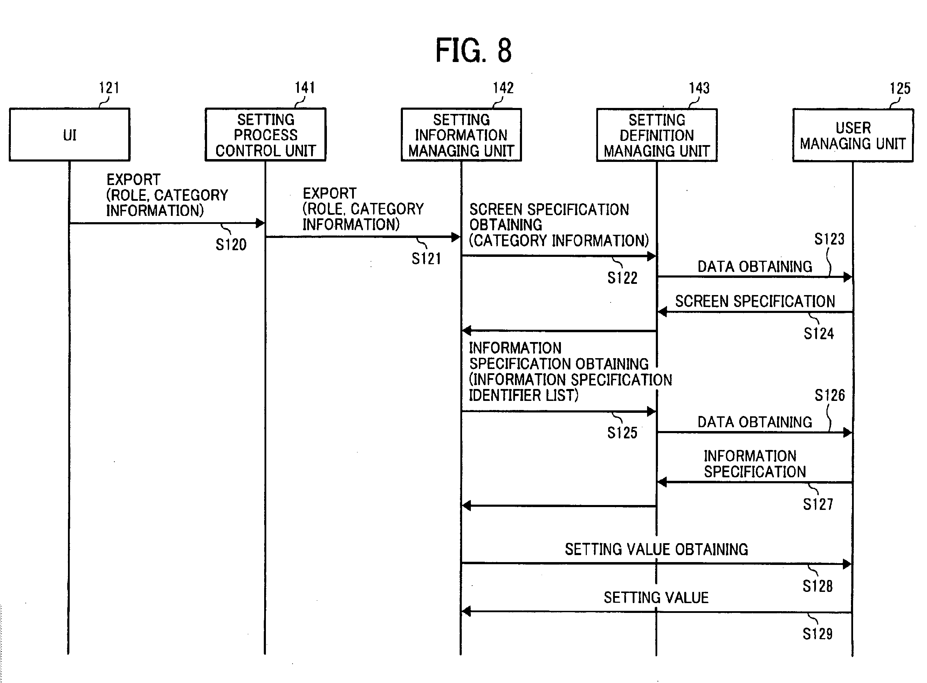

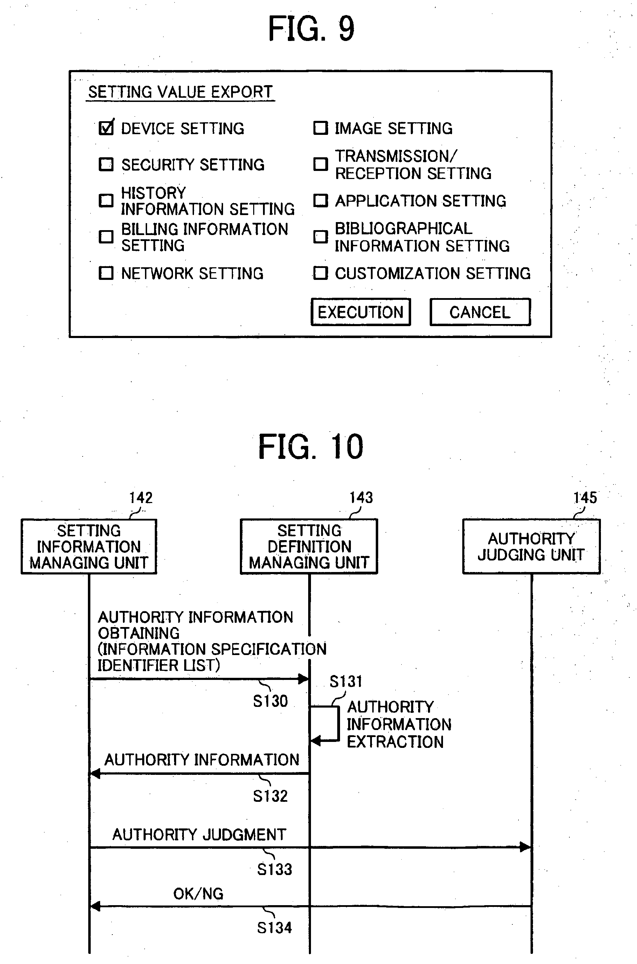

FIG. 8 is a sequence diagram illustrating details of setting value extracting processing (Step S102) explained with reference to FIG. 6. First, the export instruction is obtained from a user via the UI 121. The user can select a category of the setting values to be a target for the export in addition to the export instruction. Fig. 9 is a diagram illustrating a category selecting screen. The user selects a desired category on the category selecting screen. As shown in FIG. 4, the category displayed on the category selecting screen is the display name of each specification and is associated with each specification on one-to-one basis. In other words, the specification can be specified from the category. When all of the setting values are required to export, all of the categories are selected.

The UI 121 sends an export request to the setting process control unit 141 together with category information indicating the category selected by the user and the role of the user obtained in the login processing (Step S120). The setting process control unit 141 sends the export request, the role, and the category information to the setting information managing unit 142 (Step S121). Next, the setting information managing unit 142 sends a screen specification obtaining request to the setting definition managing unit 143 together with the category information (Step S122). Next, the setting definition managing unit 143 sends a data obtaining request and the category information to the data managing unit 125 (Step S123). The data managing unit 125 extracts the screen specification of the category indicated in the category information from the setting definition storing unit 126. The setting information managing unit 142 obtains the screen specification extracted from the setting definition storing unit 126 via the setting definition managing unit 143 (Step S124).

For example, when "device setting" is selected on the category selecting screen shown in FIG. 9, the screen specification "device setting category" corresponding to the display name "device setting" shown in FIG. 4 is selected. Moreover, a prefix search is performed with the identifier "machine" of the selected "device setting category" as a search term to select all of the screen specifications belonging to the large classification of the "device setting category". In an example shown in FIG. 4, "mail menu", "SMTP menu", "base setting menu", and the like are hit.

The setting information managing unit 142 sends an information specification obtaining request to the setting definition managing unit 143 together with an information specification identifier list on which all of the information specification identifiers associated with the obtained screen specifications are shown (Step S125). The setting definition managing unit 143 sends the data obtaining request and the information specification identifier list to the data managing unit 125 (Step S126). The data managing unit 125 extracts all of the information specifications identified by the information specification identifiers included in the information specification identifier list from the setting definition storing unit 126. The setting information managing unit 142 obtains the information specifications via the setting definition managing unit 143 (Step S127). Next, the setting information managing unit 142 sends an obtaining request for the setting values corresponding to the information specifications obtained via the setting definition managing unit 143 to the data managing unit 125 together with the setting value IDs of the setting values corresponding to the information specifications (Step S128). The data managing unit 125 extracts the setting values associated with the setting value IDs obtained from the setting definition managing unit 143 from the setting definition storing unit 126. The setting information managing unit 142 obtains the setting values extracted by the data managing unit 125 (Step S129). With the above setting value extracting processing, the setting information managing unit 142 can extract the setting values set in the MFP 100.

FIG. 10 is a sequence diagram illustrating details of authority judging processing (Step S104) explained with reference to FIG. 6. When the setting information managing unit 142 obtains the setting values in the setting value extracting processing (Step S102), the setting information managing unit 142 sends the obtaining request for authority information to the setting definition managing unit 143 together with the information specification identifier list (Step S130). When the setting definition managing unit 143 receives the obtaining request for the authority information, the setting definition managing unit 143 extracts the authority information (Step S131). Specifically, the setting definition managing unit 143 extracts the roles and the authorities of the access authorities associated with the information specification obtained from the data managing unit 125 as the authority information. Then, the setting definition managing unit 143 sends the extracted authority information to the setting information managing unit 142 (Step S132). The setting information managing unit 142 sends an authority judging request to the authority judging unit 145 together with the authority information, the role of the user, and the operation content obtained from the setting definition managing unit 143 (Step S133). The operation content is information corresponding to the authority and includes reference, update, and readout. At Step S132, the import processing is performed, so that the operation content of readout is sent to the authority judging unit 145.

The authority judging unit 145 specifies the access authority in which the role of the access authority matches the role of the user who performs an operation by the UI 121 from the access authorities associated with the information specifications. Then, when the authority content indicated in the specified access authority matches the readout that is the current operation content, it is judged that the user has the authority (OK). When the authority content does not match the readout, it is judged that the user does not have the authority (NG). Then, the result of the judgment is sent to the setting information managing unit 142 (Step S134). With the above processing, the authority judging processing completes.

For example, when a user with the user ID "user002" is an operator, the role is "device manager" according to the user information shown in FIG. 2. In an example shown in FIG. 5, the authority of reference, update, and readout is associated with "SMTP server name setting" for the device manager in "SMTP server name setting authority 3". Therefore, the authority judging unit 145 judges that the user has the authority of reading out the setting value for "SMTP server name setting". In this manner, the authority judging unit 145 judges whether a user who performs the operation has the authority of readout for the setting value for all of the information specifications included in the information specification identifier list sent from the setting information managing unit 142.

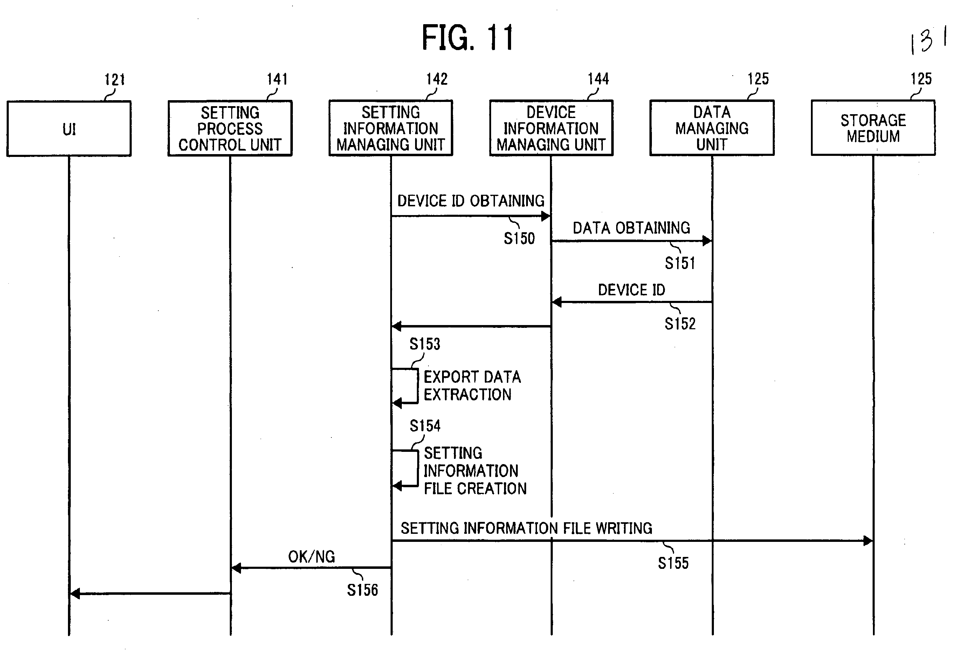

FIG. 11 is a sequence diagram illustrating details of the export processing (Step S106) explained with reference to FIG. 6. The setting information managing unit 142 sends the obtaining request for the device ID to the device information managing unit 144 (Step S150). When the device information managing unit 144 receives the device ID obtaining request, the device information managing unit 144 sends a data obtaining request to the data managing unit 125 (Step S151). The data managing unit 125 extracts the device ID from the device ID storing unit 127. The setting information managing unit 142 obtains the device ID extracted from the device ID storing unit 127 by the data managing unit 125 via the device information managing unit 144 (Step S152). When the setting information managing unit 142 obtains the device ID, the setting information managing unit 142 extracts export data (Step S153). The export data is the setting values that are extracted by the device ID and the setting information managing unit 142 and is judged by the authority judging unit 145 that a user who performs an operation has the readout authority. Next, the export data is created as the setting information file (Step S154) and the setting information file is written in the storage medium 131 (Step S155). Moreover, the setting information managing unit 142 sends information (OK/NG) indicating whether writing of the setting information file succeeds to the UI 121 via the setting process control unit 141 (Step S156). The UI 121 displays whether writing of the setting information file succeeds on the display screen, and notifies a user thereof. With the above processing, the export processing completes.

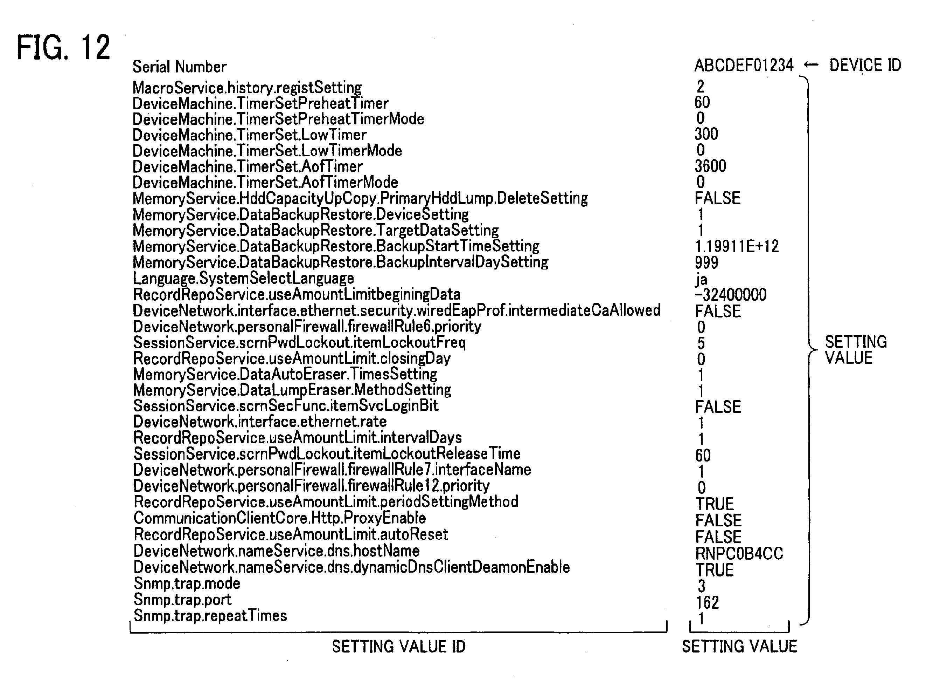

FIG. 12 is a diagram schematically illustrating a data structure of the setting information file created in the export processing. The device ID of the MFP 100 is indicated at the top of the setting information file. The setting values are indicated following the device ID. The setting values are indicated while being associated with the setting value IDs. The display name of the information specification corresponding to the setting value can be further included in the setting information file.

In this manner, because the MFP 100 exports the setting information file including the device ID of the device on which the setting values are set in addition to the setting values, it is possible to know whether the setting values are set on the same model by the device ID in the device that imports the setting information file. Therefore, it is possible to prevent the setting value that should not be imported when the model is different from being set.

Moreover, because only the setting value that an operator has the authority (readout authority) for export is taken as the export target, it is possible to prevent an unauthorized user from reading out the setting value.

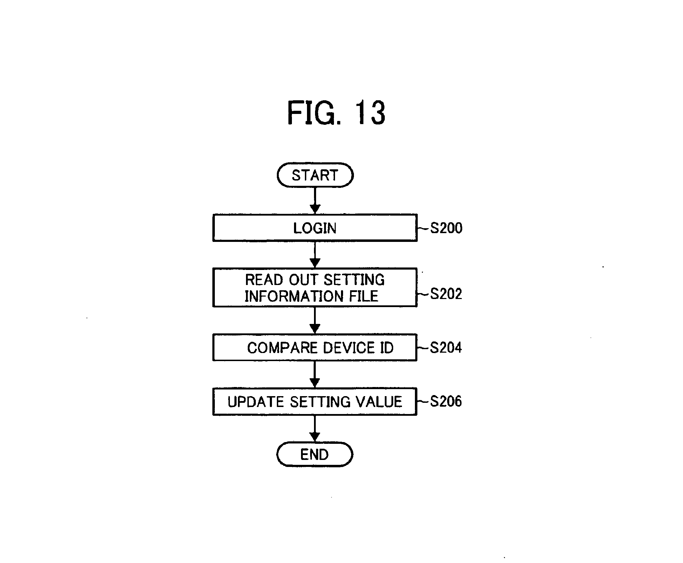

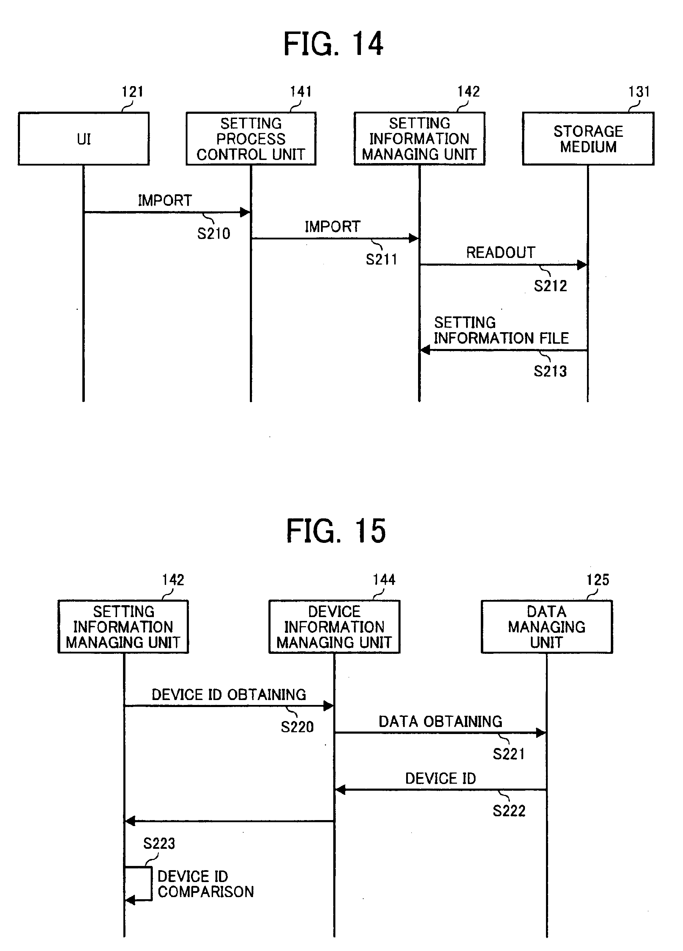

Next, a case is explained in which the MFP 100 imports the setting information file created in a different device. The data structure of the setting information file is as shown in FIG. 12. FIG. 13 is a flowchart illustrating import processing of the setting information file. First, when the user ID is input from a user via the UI 121, the user authenticating unit 124 performs the login processing (Step S200). The login processing is similar to the login processing (Step S100) explained with reference to FIG. 7. Next, when an import instruction is input from the user via the UI 121, the setting information managing unit 142 reads out the setting information file stored in the storage medium 131 (Step S202). Next, the device ID indicated in the setting information file is compared with the device ID stored in the device ID storing unit 127 (Step S204). Next, the setting information managing unit 142 updates the setting values set in the setting definition storing unit 126 to the setting values indicated in the setting information file in accordance with the comparison result of the device IDs (Step S206). Each processing is explained in detail below with reference to FIG. 14 and subsequent drawings.

FIG. 14 is a sequence diagram illustrating details of setting information file readout processing (Step S202) explained with reference to FIG. 13. First, when an import instruction is obtained from a user via the UI 121, the UI 121 requests the setting process control unit 141 to perform the import (Step S210). When the setting process control unit 141 obtains the import request, the setting process control unit 141 requests the setting information managing unit 142 to perform the import (Step S211). When the setting information managing unit 142 obtains the import request, the setting information managing unit 142 accesses the storage medium 131 (Step S212) and reads out the setting information file (Step S213). With the above processing, the setting information file readout processing completes.

FIG. 15 is a sequence diagram illustrating details of device ID comparing processing (Step S204) explained with reference to FIG. 13. When the setting information managing unit 142 reads out the setting information file in the setting information file readout processing (Step S202), the setting information managing unit 142 requests the device information managing unit 144 to obtain the device ID (Step S220). The device information managing unit 144 requests the data managing unit 125 to perform the data obtaining (Step S221). The data managing unit 125 extracts the device ID of the MFP 100 from the device ID storing unit 127. The setting information managing unit 142 obtains the device ID from the data managing unit 125 via the device information managing unit 144 (Step S222). Next, the setting information managing unit 142 compares the device ID obtained from the data managing unit 125, i.e., the device ID stored in the device ID storing unit 127 with the device ID indicated in the setting information file (Step S223). With the above processing, the device ID comparing processing completes.

In this manner, in the import processing, it is judged whether the setting values as an import target, i.e., the setting values included in the setting information file are the setting values with respect to the same model before actually importing the setting values. Then, update processing is performed in accordance with the result of the judgment.

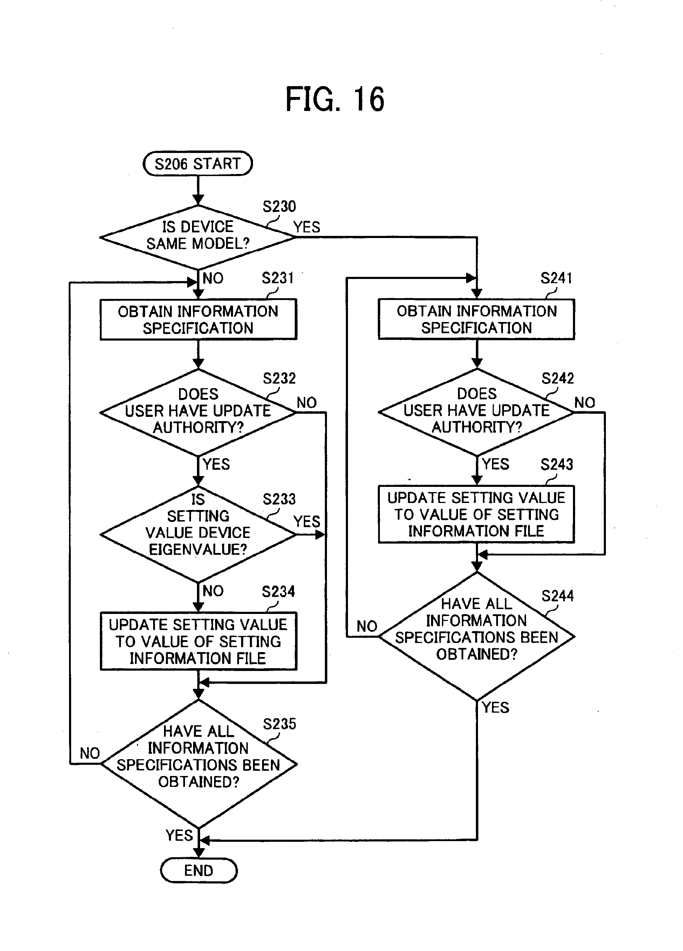

FIG. 16 is a flowchart illustrating details of setting value update processing (Step S206) explained with reference to FIG. 13. When the device ID included in the setting information file is different from its own device ID stored in the device ID storing unit 127 (No at Step S230), the setting information managing unit 142 first obtains one predetermined information specification from the setting definition storing unit 126 (Step S231). Next, the setting information managing unit 142 judges whether a user who is performing the import has the authority for performing the import, i.e., the update authority, based on the role and the authority indicated in the obtained information specification and the role of the user specified in the login processing (Step S200).

When the user has the update authority (Yes at Step S232), the setting information managing unit 142 further judges whether the setting value corresponding to the information specification is a device eigenvalue based on the device eigenvalue indicated in the information specification. When the setting value is not the device eigenvalue (No at Step S233), the setting value with respect to this information specification is updated to a corresponding setting value indicated in the setting information file (Step S234). On the other hand, when the setting value is the device eigenvalue (Yes at Step S233), the system control proceeds to Step S235 without updating the setting value with respect to this information specification.

Next, when not all of the information specifications stored in the setting definition storing unit 126 are obtained (No at Step S235), the system control returns to Step S231 again to obtain a different information specification (Step S231). When all of the information specifications are obtained (Yes at Step S235), the setting value update processing completes.

In this manner, in the MFP 100 according to the present embodiment, even when the device ID does not match, the setting values other than the device eigenvalue can be updated. Whether the setting value is the device eigenvalue that is a value unique to the model is defined for each setting value in this manner, so that update can be performed for the setting value that causes no problem even if it is updated between difference devices.

Moreover, it is checked whether a user has the update authority for each information specification, and the setting value with respect to the information specification is updated only when the user has the update authority, so that it is possible to prevent an unauthorized user from performing update.

On the other hand, in the case of the same model (Yes at Step S230), the setting information managing unit 142 obtains the information specification (Step S241), and, when the user has the update authority (Yes Step S242), updates the setting value with respect to the information specification to the setting value indicated in the setting information file (Step S243). When the user does not have the update authority (No Step S242), the setting information managing unit 142 does not perform update of the setting value with respect to the information specification and the system control proceeds to Step S244. The above processing is performed on all of the information specifications stored in the setting definition storing unit 126 (Yes at Step S244), and the processing completes.

In this manner, in the case of the same model, the setting value of the information specification for which a user has the update authority is updated to the setting value indicated in the setting information file without judging whether the setting value is the device eigenvalue.

Information specification obtaining processing (Steps S231 and S241) is similar to the information specification obtaining processing (Steps S125 to S127) explained with reference to FIG. 8. Moreover, the processing (Steps S232 and S242) of judging whether a user has the update authority is similar to the authority judging processing (Steps S130 to S134) explained with reference to FIG. 10.

As described above, in the MFP 100 according to the present embodiment, at the time of the export, the setting information file that includes not only the device setting values but also the device ID can be created and output. Moreover, because a user can select the category of the setting value to be included in the setting information file, all of the setting values set in the MFP 100 can be included or only desired setting value can be output as the setting information file.

Furthermore, at the time of the import, it is possible to know whether the setting value is for the same model by comparing the device ID of the setting information file with its own device ID, so that it is possible to judge which setting value is to be imported.

Moreover, because the authorities for the export and the import are defined for each setting value, it is possible to prevent an unauthorized user from performing the export and the import.

As a modified example, the setting value included in the setting information file can be rewritten via the UI 121. The setting information file is described in a format rewritable by a user. The setting information file can be written, for example, in CVS format.

In the MFP 100 according to a second embodiment, when creating the setting information file, information indicating a range of a value that can be set as the setting value, a data type of the setting value, and an application for the setting value is associated with each setting value. When importing the setting information file, it is judged whether to import the setting value based on these information.

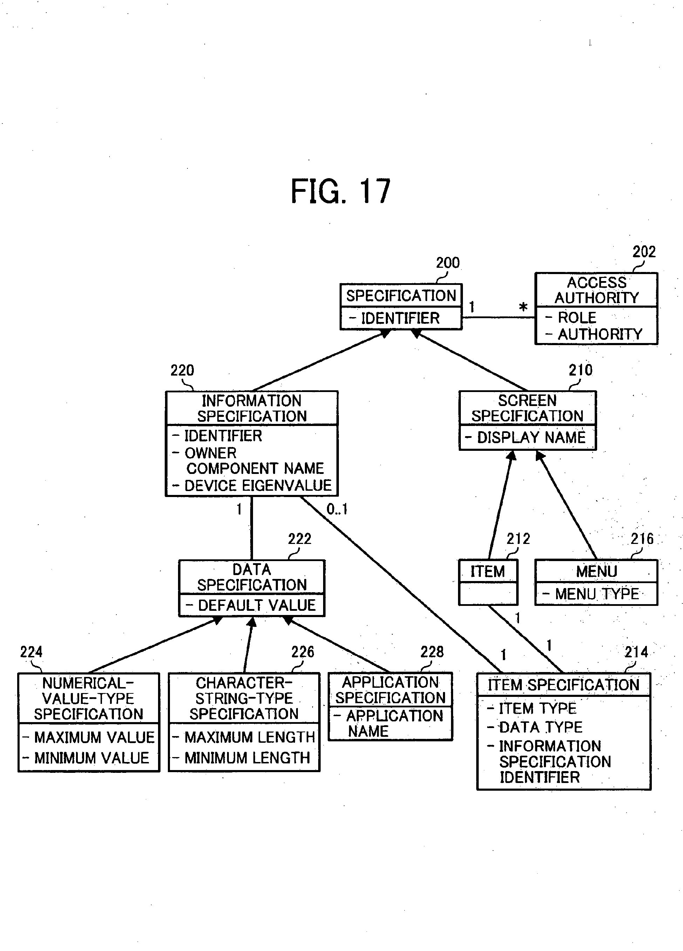

FIG. 17 is a class diagram of the setting definition data stored in the setting definition storing unit 126 according to the second embodiment. As shown in FIG. 17, in the setting definition data stored in the setting definition storing unit 126 according to the present embodiment, an application specification class 228 is defined in the data specification class 222 in addition to the numerical-value-type specification class 224 and the character-string-type specification class 226. The application specification class 228 is a class that manages the application of data on the information specification. The application specification class 228 includes an application name that is information for identifying the application of the setting value as an attribute.

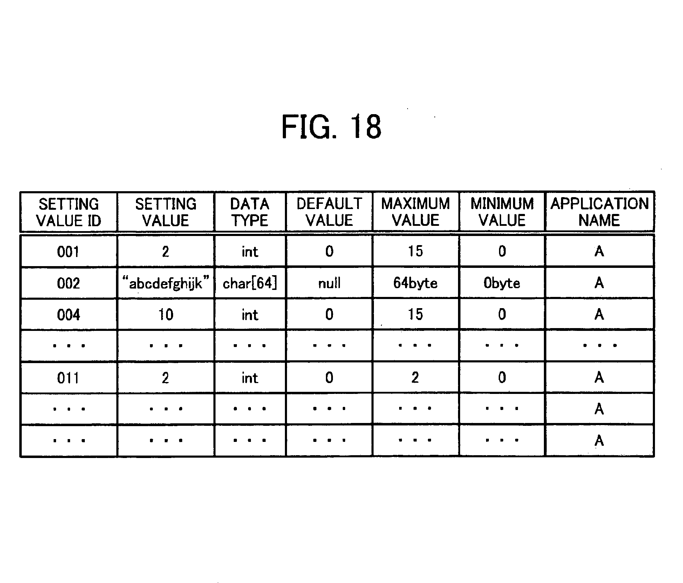

FIG. 18 is a diagram schematically illustrating a data structure of the setting information file output from the MFP 100 according to the second embodiment. As shown in FIG. 18, the setting information file includes a data type, a default value, a maximum value, a minimum value, and an application name, in addition to the setting value ID and the setting value. The data type is information indicating whether the setting value is a character string type or a numerical value type. For convenience' sake of explanation, the setting value ID is different from the setting value ID in the first embodiment and is shown as a simplified example. When the data type is different, the setting range of data that is defined by the maximum value and the minimum value is different, or the application of the setting value is different, even the setting value with the same information specification should not be updated in some cases. Therefore, in the present embodiment, the setting information managing unit 142 creates the setting information file including the setting range, the data type, and the application name while being associated with the setting value. The setting information managing unit 142 corresponds to a failure list creating unit.

Consequently, when importing this setting information file, it is possible to judge whether to import the setting value included in the setting information file based on the information such as the data type of the setting value. Moreover, when importing the setting information file, the setting information managing unit 142 creates an update result file indicating whether update of each information specification is performed and displays it on the display screen.

Next, the import processing when the MFP 100 imports the setting information file shown in FIG. 18 is explained. The processing from the login processing (Step S200) to the device ID comparing processing (Step S204) in the import processing is similar to that performed by the MFP 100 in the first embodiment explained with reference to FIG. 13 to FIG. 15.

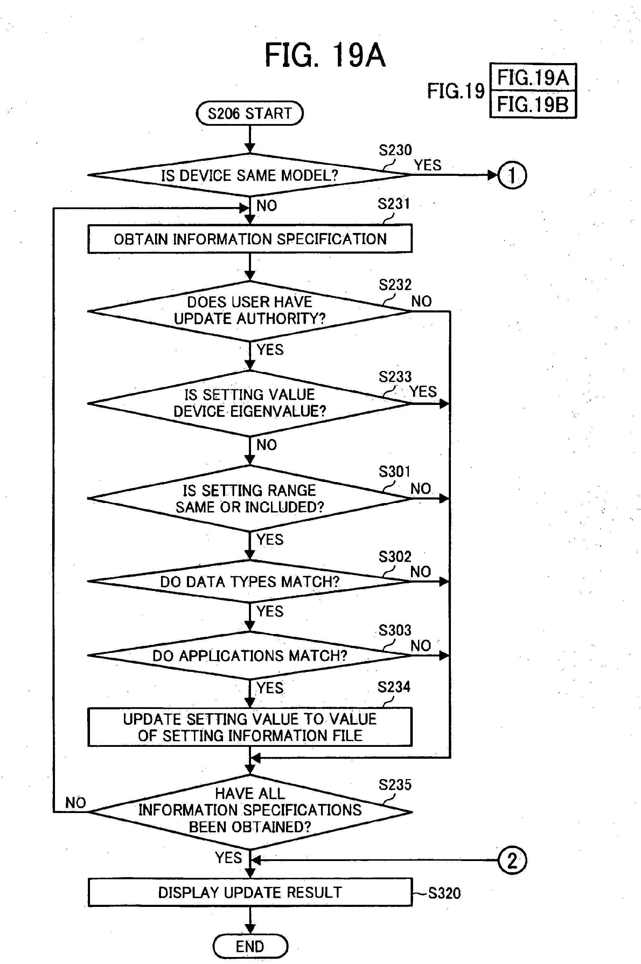

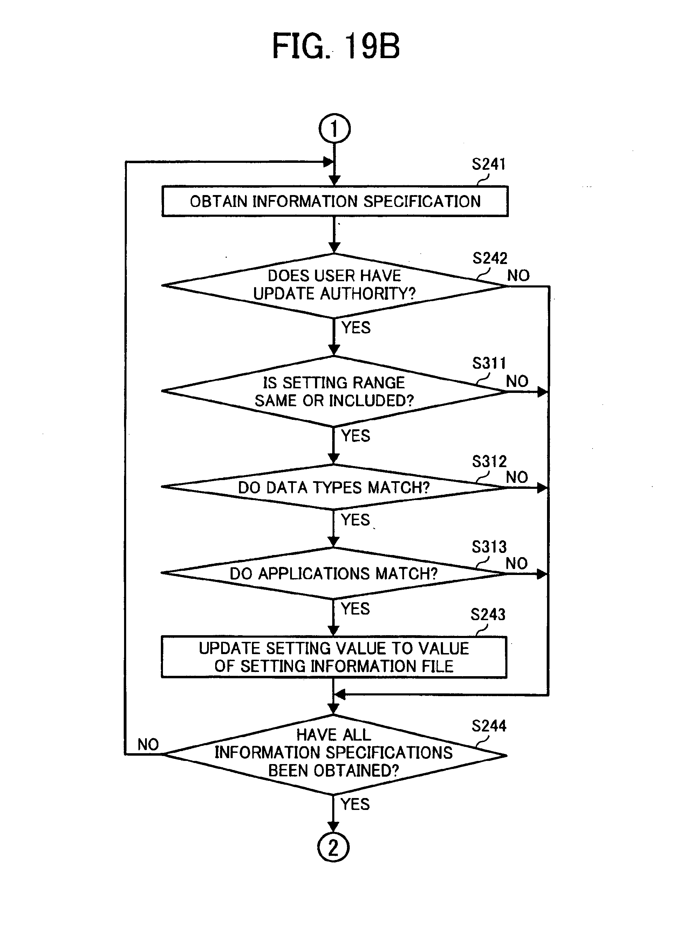

FIG. 19 is a flowchart illustrating the setting value update processing by the MFP 100 according to the second embodiment. When the device ID stored in the device ID storing unit 127, i.e., the device ID of the MFP 100, and the device ID indicated in the setting information file do not match (No at Step S230), the information specification is obtained, and when a user is judged to have the update authority, and it is judged that the setting value is not the device eigenvalue (at Steps S231 and Yes at S232, No at Step S233), the setting information managing unit 142 further compares the setting range of the setting value indicated in the information specification and the setting range of a corresponding setting value indicated in the setting information file. Specifically, the maximum value and the minimum value in the respective setting ranges are compared.

When the setting range indicated in the setting information file is the same as the setting range of the setting value indicated in the information specification stored in the setting definition storing unit 126 and the setting range indicated in the setting information file is included in the setting range of the setting value indicated in the information specification stored in the setting definition storing unit 126 (Yes at Step S301), the system control proceeds to Step S302, and, furthermore, the data type indicated in the information specification is compared with the data type of the corresponding setting value indicated in the setting information file.

When both data types match (Yes at Step S302), the system control proceeds to Step S303, and the application name indicated in the information specification is compared with the application name of the corresponding setting value indicated in the setting information file. When both application names match (Yes at Step S303), the setting value indicated in the information specification is updated to the corresponding setting value indicated in the setting information file (Step S234). When the setting ranges do not match and the setting range of the corresponding setting value included in the setting information file is not included in the setting range indicated in the information specification at Step S301 (No at Step S301), when both data types do not match (No at Step S302), or when both application names do not match (No at Step S303), the setting value is not updated and the system control proceeds to Step S235.

In this manner, in the MFP 100 according to the present embodiment, at the export, in addition to the judgment of whether a user has the authority for the export, only when the setting range, the data type, and the application of the setting value to be updated match, an update of the setting value is performed. Thus, a trouble in the update because of the difference of the setting range, the data type, and the application is prevented from occurring.

The processing (Steps S311 to S244) after the case where the device ID of the MFP 100 matches the device ID indicated in the setting information file (Yes at Step S230), the information specification is obtained (Step S241), and it is judged that a user has the update authority (Yes at Step S242) is similar to the above processing from Step S301 to Step S234.

Moreover, when the update processing for all of the information specifications stored in the setting definition storing unit 126 is completed (Yes at Step S235 or Yes at Step S245), the setting information managing unit 142 displays the update result file indicating whether the update to each information specification is performed is displayed on the display screen as the UI 121 (Step S320). With the above processing, the setting value update processing completes.

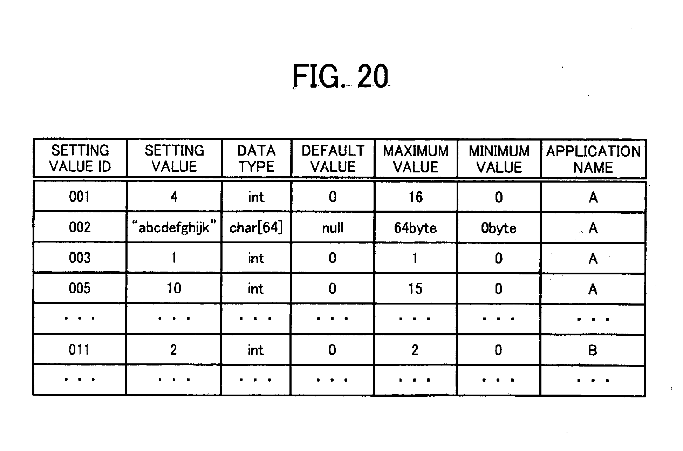

Next, a specific example of the setting value update processing is explained. FIG. 20 is a diagram illustrating the information specifications stored in the device ID storing unit 127 of the MFP 100 as an import destination. The setting information file shown in FIG. 18 is imported to the MFP 100.

For example, for the setting value identified with the setting value ID "001", the setting range of the setting information file is 0-15 and the setting range of the information specification of the export destination is 0-16. Therefore, both setting ranges do not match; however, the setting range of the setting information file is included in the setting range of the export destination. Moreover, both of the data type of the setting information file and the data type of the information specification of the import destination are the same as "int". Furthermore, the application name of both of them is the same as "A". Thus, the setting value of the import destination identified with "001" is updated to the setting value of the setting information file.

Furthermore, only the application name of the setting value identified with the setting value ID "001" is different from that of the setting information file in the import destination. When the application name is different even if the setting range and the data type are the same in this manner, a trouble may occur if update of the setting value is performed, so that the update is not performed. Moreover, the setting value with the setting value ID "004" indicated in the setting information file is not present in the information specification of the import destination. The setting value that is not present in the information specification of the import destination is not updated. The setting value that is not present in the setting information file but is present in the information specification of the import destination is also not updated.

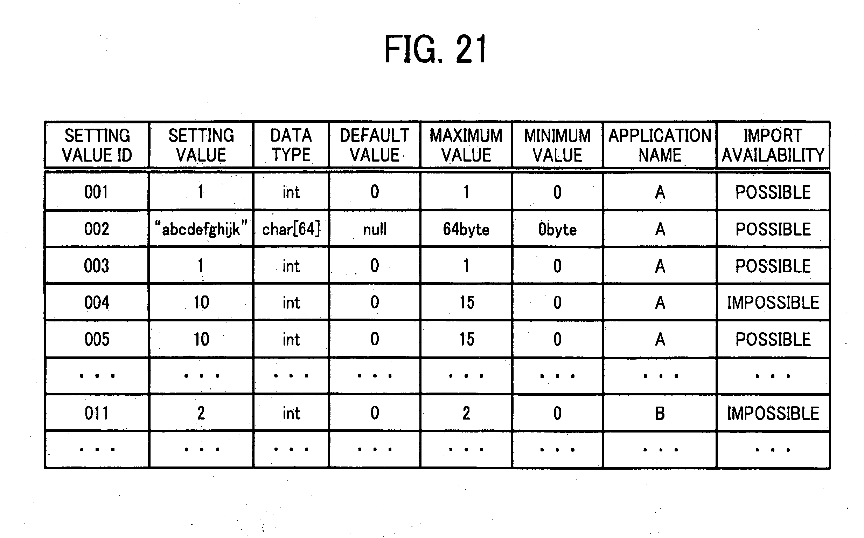

FIG. 21 is a diagram schematically illustrating a data structure of the update result file created by the above setting value update processing. In the update result file, information indicating whether the import can be performed is indicated in addition to the setting value ID, the setting value, the data type, the default value, the setting range (the maximum value and the minimum value), and the application name as each information specification. In the example shown in FIG. 21, because the setting value of the setting value ID "004" is not updated, information indicating the import "impossible" is associated with the setting value ID "004". The update result file, in which the update result of each setting value is indicated in this manner, is displayed on the display screen, so that a user can easily recognize whether each setting value is updated.

As another example, the update result file including only the information specification that is not updated can be created. Whereby, a user can recognize the information specification that is not updated.

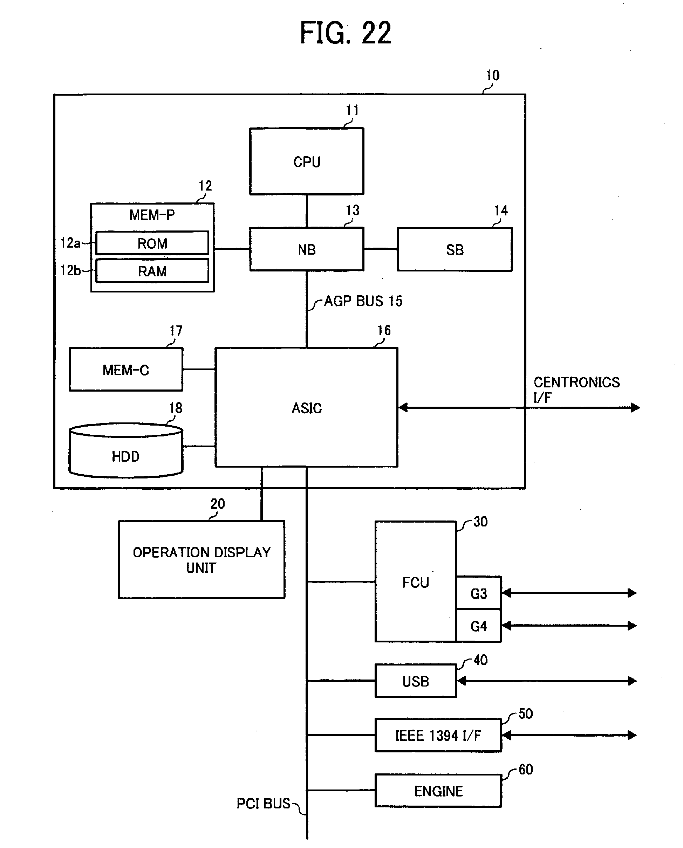

FIG. 22 is a block diagram illustrating a hardware configuration of the MFP 100 according to the first and second embodiments. As shown in FIG. 22, the MFP 100 is configured by connecting a controller 10 and an engine unit (engine) 60 with a peripheral component interface (PCI) bus. The controller 10 is a controller that controls the entire MFP 100, drawing, communication, and input from an operating unit (not shown). The engine unit 60 is such as a printer engine capable of connecting to the PCI bus, and is, for example, a black-and-white plotter, a single-drum color plotter, a four-drum color plotter, a scanner, or a fax unit. The engine unit 60 includes an image processing unit such as error diffusion and gamma conversion in addition to a so-called engine unit such as the plotter.

The controller 10 includes a central processing unit (CPU) 11, a north bridge (NB) 13, a system memory (MEM-P) 12, a south bridge (SB) 14, a local memory (MEM-C) 17, an application specific integrated circuit (ASIC) 16, and a hard disk drive (HDD) 18, and is configured by connecting the NB 13 and the ASIC 16 via an accelerated graphics port (AGP) bus 15. The MEM-P 12 includes a read only memory (ROM) 12a and a random access memory (RAM) 12b.

The CPU 11 controls the entire MFP 100. The CPU 11 includes a chip set including the NB 13, the MEM-P 12, and the SB 14, through which the CPU 11 is connected to other devices.

The NB 13 is a bridge for connecting the CPU 11 to the MEM-P 12, the SB 14, and the AGP bus 15, and includes a memory controller that controls read and write operations to the MEM-P 12 and the like, a PCI master, and an AGP target.

The MEM-P 12 is a system memory that is used as a memory for storing computer programs and data, a memory for loading computer programs and data, a memory for drawing in a printer, or the like, and includes the ROM 12a and the RAM 12b. The ROM 12a is a read-only memory used as a memory for storing computer programs and data. The RAM 12b is a writable and readable memory used as a memory for loading computer programs and data, a memory for drawing in a printer, or the like.

The SB 14 is a bridge for connecting the NB 13, a PCI bus, and a peripheral device. The SB 14 is connected to the NB 13 via the PCI bus. A network I/F (not shown) and the like are also connected to the PCI bus.

The ASIC 16 is an integrated circuit (IC) for image processing including an image-processing hardware element, and functions as a bridge that connects the AGP bus 15, the PCI bus, the HDD 18, and the MEM-C 17 to each other. The ASIC 16 includes a PCI target, an AGP master, an arbiter (ARB) forming a core of the ASIC 16, a memory controller that controls the MEM-C 17, a plurality of direct memory access controllers (DMACs) that rotate image data by a hardware logic and the like, and a PCI unit that performs data transfer with the engine unit 60 via the PCI bus. A facsimile control unit (FCU) 30, a universal serial bus (USB) 40, and an institute of electrical and electronics engineers (IEEE) 1394 I/F 50 are connected to the ASIC 16 via the PCI bus. An operation display unit 20 is directly connected to the ASIC 16.

The MEM-C 17 is a local memory used as a copy image buffer and a code buffer. The HDD 18 is a storage that stores therein image data, computer programs, font data, and forms.

The AGP bus 15 is a bus I/F for a graphics accelerator card proposed to speed up graphic processing. By making a direct access to the MEM-P 12 at high throughput, a graphics accelerator card speeds up.

The information processing program executed in the MFP 100 according to the present embodiment is incorporated in a ROM or the like in advance and is provided. The information processing program executed in the MFP 100 according to the present embodiment can be provided in such a way that the information processing program is recorded as an installable format file or an executable format file in a computer-readable recording medium such as a compact disc read only memory (CD-ROM), a flexible disk (FD), a compact disc recordable (CD-R), and a digital versatile disc (DVD).

Moreover, the information processing program executed in the MFP 100 according to the present embodiment can be provided in such a way that the information processing program is stored in a computer connected to a network such as the Internet and is downloaded via the network. The information processing program executed in the MFP 100 according to the present embodiment can also be provided or distributed via the network such as the Internet.

The information processing program executed in the MFP 100 according to the present embodiment is a module structure including each unit described above. As an actual hardware, the CPU (processor) reads the information processing program from the ROM and executes the information processing program. Due to this, each unit is loaded on a main storage device and is generated on the main storage device.

In the above embodiments, explanation is given for the case that the information processing apparatus of the present invention is applied to an MFP that includes at least two functions of a copier function, a printer function, a scanner function, and a facsimile function as an example; however, the information processing apparatus of the present invention can be applied to any image forming apparatus such as a copier, a printer, a scanner device, and a facsimile device.

According to an aspect of the present invention, when a setting value of a predetermined device is set to another device, a trouble that the device to which the setting value is newly set does not operate correctly is prevented.

According to another aspect of the present invention there is provided an information processing method implemented by an information processing apparatus that performs information processing by using a plurality of setting values, wherein the information processing apparatus includes an identification information storing unit that stores therein device identification information for identifying the information processing apparatus, and a setting value storing unit that stores therein various setting values and unique information that indicates whether the setting value is a device eigenvalue that cannot be set to a device different from the information processing apparatus, in an associated manner, the information processing method including obtaining a setting information file that includes various setting values used in the information processing apparatus and the device identification information for identifying a device to which the setting value can be set by a file obtaining unit; comparing the device identification information included in the setting information file and the device identification information stored in the identification information storing unit by a comparing unit; and updating a setting value other than the device eigenvalue among the setting values stored in the setting value storing unit to a setting value stored in the setting information file by a setting value updating unit, when the device identification information included in the setting information file does not match the device identification information stored in the identification information storing unit.

According to still another aspect of the present invention there is provided a computer program product comprising a computer-usable medium having computer-readable program codes embodied in the medium that when executed cause a computer that performs information processing by using a plurality of setting values to execute functioning as an identification information storing unit that stores therein device identification information for identifying the computer; functioning as a setting value storing unit that stores therein various setting values used in a device and unique information that indicates whether the setting value is a device eigenvalue that cannot be set to a device different from a predetermined information processing apparatus, in an associated manner; functioning as a file obtaining unit that obtains a setting information file that includes various setting values and the device identification information for identifying a device to which the setting value can be set; functioning as a comparing unit that compares the device identification information included in the setting information file and the device identification information stored in the identification information storing unit; and functioning as a setting value updating unit that updates a setting value other than the device eigenvalue among the setting values stored in the setting value storing unit to a setting value stored in the setting information file, when the device identification information included in the setting information file does not match the device identification information stored in the identification information storing unit.

## Claims

1. An information processing apparatus (100) that performs information processing by using a plurality of first setting values, the apparatus comprising:
an identification information storing unit (128) adapted to store therein device identification information for identifying the information processing apparatus;
a setting value storing unit (126) adapted to store therein the first setting values used in the information processing apparatus, unique information indicating whether the first setting value can be set to a device different from the information processing apparatus, and setting range information indicating a setting range of the first setting value in an associated manner;
a file obtaining unit (142) adapted to obtain a setting information file that includes second setting values, setting range information indicating a setting range of the second setting value and device identification information for identifying a sender of the setting information file;
a comparing unit (142) adapted to compare the device identification information included in the setting information file and the device identification information stored in the identification information storing unit (128);
a range comparing unit (142) adapted to compare the setting range information associated with the second setting value with the setting range information associated with the first setting value; and
a setting value updating unit (142) adapted to update the first setting value with which the unique information stored in the setting value storing unit (126) is not associated to the second setting value included in the setting information file, when the device identification information included in the setting information file does not match the device identification information stored in the identification information storing unit (128), and to update the first setting value stored in the setting value storing unit (126) to the second setting value included in the setting information file irrespective of the unique information when the setting range of the second setting value is same with or included in the setting range of the first setting value.

2. An information processing apparatus according to claim 1, wherein
the setting value updating unit (142) updates the first setting values to the second setting values irrespective of the unique information, when the device identification information included in the setting information file matches the device identification information stored in the identification information storing unit (128).

3. An information processing apparatus according to claim 1 or 2, wherein
the setting value storing unit (126) further stores therein first user identification information for identifying a user who is allowed to update the first setting value in association with the first setting value.
the information processing apparatus further includes
a user-identification-information obtaining unit (141) that obtains the first user identification information of a user, and
a first authority judging unit (145) that compares the first user identification information obtained by the user-identification-information obtaining unit (141) with the first user identification information stored in the setting value storing unit (126) and judges whether the user has an update authority to update the first setting value to the second setting value, and
the setting value updating unit (142) updates the first setting value to the second setting value when the first authority judging unit (145) judges that the user has the update authority.

4. An information processing apparatus according to any one of claims 1 to 3, wherein
the setting value storing unit (126) further stores therein data type information that is information indicating a data type of the first setting value in association with the first setting value,
the file obtaining unit (142) obtains the setting information file that further includes data type information indicating a data type of the second setting value and being associated with the second setting value,
the information processing apparatus further includes
a data type comparing unit (142) that compares the data type information associated with the second setting value with the data type information associated with the first setting value, and
the setting value updating unit (142) updates the first setting value to the second setting value when the data type of the first setting value matches the data type of the second setting value.

5. An information processing apparatus according to any one of claims 1 to 4, wherein
the setting value storing unit (126) further stores therein application information that is information indicating an application of the first setting value in association with the first setting value,
the file obtaining unit (142) obtains the setting information file that further includes application information indicating an application of the second setting value, the application information being associated with the second setting value,
the information processing apparatus further includes
an application comparing unit (142) that compares the application information associated with the second setting value with the application information associated with the first setting value, and
the setting value updating unit (142) updates the first setting value to the second setting value when the application information of the second setting value matches the application information of the first setting value.

6. An information processing apparatus according to any one of claims 1 to 5, further comprising:
a failure list creating unit (142) that creates an update failure list that indicates the second setting value that is not set in the setting value storing unit (126) among the second setting values included in the setting information file; and
a display unit (121) that displays the update failure list.

7. An information processing apparatus according to any one of claims 1 to 6, further comprising:
a creating unit (142) that creates a second setting information file that includes the device identification information stored in the identification information storing unit (128) and the first setting values stored in the setting value storing unit (126); and
an output unit (142) that outputs the second setting information file.

8. An information processing apparatus according to claim 7, wherein
the setting value storing unit (126) further stores therein second user identification information for identifying a user who has a readout authority to read out the first setting value, the second user identification information being stored in association with the first setting value,
the information processing apparatus further includes
a readout receiving unit (121) that receives input of the second user identification information of a user and a readout instruction instructing a readout of the setting information file to an outside from the user, and
a second authority judging unit (145) that compares the second user identification information received together with the readout instruction with the second user identification information associated with the first setting value in the setting value storing unit (126) and judges whether the user has the readout authority to read out the first setting value when the readout receiving unit (121) receives the readout instruction, and
the creating unit (142) creates the second setting information file that includes the device identification information and the first stetting value when the second authority judging unit (145) judges that the user has the readout authority.

9. An information processing apparatus according to claim 7 or 8, wherein
the creating unit (142) creates the second setting information file that includes the first setting value, the setting range information associated with the first setting value, and the device identification information.

10. An information processing apparatus according to any one of claims 7 to 9, wherein
the setting value storing unit (126) further stores therein data type information that is information indicating a data type of the first setting value in association with the first setting value
the creating unit (142) creates the second setting information file that includes the first setting value, the data type information associated with the first setting value, and the device identification information.

11. An information processing apparatus according to any one of claims 7 to 10, wherein
the setting value storing unit (126) further stores therein application information indicating an application of the first setting value in association with the first setting value
the creating unit (142) creates the second setting information file that includes the first setting value, the application information associated with the first setting value, and the device identification information.

12. An information processing apparatus according to any one of claims 7 to 11, wherein
the setting information file is data in an editable format, and
the information processing apparatus further includes
a change receiving unit (121) that receives a change instruction of the first setting value or the second setting value included in the setting information file from the user, and
an editing unit (142) that edits the first setting value or the second setting value included in the setting information file in accordance with the change instruction.

13. An information processing apparatus according to any one of claims 7 to 12, wherein
the output unit (142) outputs the second setting information file to a recording medium or to another device via a network.

14. An information processing apparatus according to any one of claims 7 to 13, further comprising:
a display unit (121) that displays a plurality of the first setting values stored in the setting value storing unit (126); and
a selection receiving unit (121) that receives a selection of the first setting value desired by the user from the first setting values displayed on the display unit (121) in accordance with input by the user, wherein
the creating unit (142) creates the second setting information file that includes the first setting value of which selection is received by the selection receiving unit (121) and the device identification information.

## Patentansprüche

1. Informationsverarbeitungsvorrichtung (100), die Informationsverarbeitung ausführt, indem sie eine Vielzahl von ersten Einstellwerten verwendet, wobei die Vorrichtung umfasst:
eine Identifikationsinformations-Speichereinheit (128), die dazu angepasst ist, Einrichtungsidentifikationsinformation zum Identifizieren der Informationsverarbeitungsvorrichtung darin zu speichern;
eine Einstellwert-Speichereinheit (126), die dazu angepasst ist, die in der Informationsverarbeitungsvorrichtung verwendeten ersten Einstellwerte darin zu speichern, eindeutige Information, die anzeigt, ob der erste Einstellwert auf eine Einrichtung eingestellt werden kann, die von der Informationsverarbeitungsvorrichtung verschieden ist, und Einstellbereichsinformation, die einen Einstellbereich des ersten Einstellwerts auf einer assoziierte Weise anzeigt;
eine Dateibeschaffungseinheit (142), die dazu angepasst ist, eine Einstellinformationsdatei zu beschaffen, die Folgendes einschließt: zweite Einstellwerte, Einstellbereichsinformation, die einen Einstellbereich des zweiten Einstellwerts anzeigt, und Einrichtungsidentifikationsinformation zum Identifizieren eines Senders der Einstellinformationsdatei;
eine Vergleichseinheit (142), die dazu angepasst ist, die in der Einstellinformationsdatei eingeschlossene Einrichtungsidentifikationsinformation und die in der Identifikationsinformations-Speichereinheit (128) gespeicherte Einrichtungsidentifikationsinformation zu vergleichen;
eine Bereichsvergleichseinheit (142), die dazu angepasst ist, die mit dem zweiten Einstellwert assoziierte Einstellbereichsinformation mit der mit dem ersten Einstellwert assoziierten Einstellbereichsinformation zu vergleichen; und
eine Einstellwert-Aktualisierungseinheit (142), die dazu angepasst ist, den ersten Einstellwert, mit dem die in der Einstellwert-Speichereinheit (126) gespeicherte eindeutige Information nicht assoziiert ist, auf den zweiten Einstellwert zu aktualisieren, der in der Einstellinformationsdatei eingeschlossen ist, wenn die Einrichtungsidentifikationsinformation, die in der Einstellinformationsdatei eingeschlossen ist, nicht mit der Einrichtungsidentifikationsinformation übereinstimmt, die in der Identifikationsinformations-Speichereinheit (128) gespeichert ist, und den ersten Einstellwert, der in der Einstellwert-Speichereinheit (126) gespeichert ist, auf den zweiten Einstellwert zu aktualisieren, der in der Einstellinformationsdatei eingeschlossen ist, ungeachtet der eindeutigen Information, wenn der Einstellbereich des zweiten Einstellwerts derselbe ist wie der Einstellbereich des ersten Einstellwerts oder in demselben eingeschlossen ist.

2. Informationsverarbeitungsvorrichtung nach Anspruch 1, worin
die Einstellwert-Aktualisierungseinheit (142) die ersten Einstellwerte auf die zweiten Einstellwerte aktualisiert, ungeachtet der eindeutigen Information, wenn die in der Einstellinformationsdatei eingeschlossene Einrichtungsidentifikationsinformation mit der in der Identifikationsinformations-Speichereinheit (128) gespeicherten Einrichtungsidentifikationsinformation übereinstimmt.

3. Informationsverarbeitungsvorrichtung nach Anspruch 1 oder 2, worin
die Einstellwert-Speichereinheit (126) außerdem erste Benutzeridentifikationsinformation zum Identifizieren eines Benutzers darin speichert, dem erlaubt ist, den ersten Einstellwert in Verbindung mit dem ersten Einstellwert zu aktualisieren,
wobei die Informationsverarbeitungsvorrichtung außerdem einschließt:
eine Beschaffungseinheit für Benutzeridentifikationsinformation (141), die die erste Benutzeridentifikationsinformation eines Benutzers beschafft, und
eine erste Berechtigungsbeurteilungseinheit (145), die die durch die Beschaffungseinheit für Benutzeridentifikationsinformation (141) beschaffte erste Benutzeridentifikationsinformation mit der in der Einstellwert-Speichereinheit (126) gespeicherten ersten Benutzeridentifikationsinformation vergleicht und beurteilt, ob der Benutzer eine Aktualisierungsberechtigung hat, den ersten Einstellwert auf den zweiten Einstellwert zu aktualisieren, und
die Einstellwert-Aktualisierungseinheit (142) den ersten Einstellwert auf den zweiten Einstellwert aktualisiert, wenn die erste Berechtigungsbeurteilungseinheit (145) beurteilt, dass der Benutzer die Aktualisierungsberechtigung hat.

4. Informationsverarbeitungsvorrichtung nach einem der Ansprüche 1 bis 3, worin
die Einstellwert-Speichereinheit (126) außerdem Datentypinformation darin speichert, wobei es sich um Information handelt, die einen Datentyp des ersten Einstellwerts in Verbindung mit dem ersten Einstellwert anzeigt,
die Dateibeschaffungseinheit (142) die Einstellinformationsdatei beschafft, die außerdem Datentypinformation einschließt, die einen Datentyp des zweiten Einstellwerts anzeigt und mit dem zweiten Einstellwert assoziiert ist,
die Informationsverarbeitungsvorrichtung außerdem einschließt:
eine Datentyp-Vergleichseinheit (142), die die mit dem zweiten Einstellwert assoziierte Datentypinformation mit der mit dem ersten Einstellwert assoziierten Datentypinformation vergleicht, und
die Einstellwert-Aktualisierungseinheit (142) den ersten Einstellwert auf den zweiten Einstellwert aktualisiert, wenn der Datentyp des ersten Einstellwerts mit dem Datentyp des zweiten Einstellwerts übereinstimmt.

5. Informationsverarbeitungsvorrichtung nach einem der Ansprüche 1 bis 4, worin
die Einstellwert-Speichereinheit (126) außerdem Anwendungsinformation darin speichert, wobei es sich um Information handelt, die eine Anwendung des ersten Einstellwerts in Verbindung mit dem ersten Einstellwert anzeigt,
die Dateibeschaffungseinheit (142) die Einstellinformationsdatei beschafft, die außerdem Anwendungsinformation einschließt, die eine Anwendung des zweiten Einstellwerts anzeigt, wobei die Anwendungsinformation mit dem zweiten Einstellwert assoziiert ist,
die Informationsverarbeitungsvorrichtung außerdem einschließt:
eine Anwendungs-Vergleichseinheit (142), die die mit dem zweiten Einstellwert assoziierte Anwendungsinformation mit der mit dem ersten Einstellwert assoziierten Anwendungsinformation vergleicht, und
die Einstellwert-Aktualisierungseinheit (142) den ersten Einstellwert auf den zweiten Einstellwert aktualisiert, wenn die Anwendungsinformation des zweiten Einstellwerts mit der Anwendungsinformation des ersten Einstellwerts übereinstimmt.

6. Informationsverarbeitungsvorrichtung nach einem der Ansprüche 1 bis 5, außerdem umfassend:
eine Fehlerlisten-Erzeugungseinheit (142), die eine Aktualisierungsfehlerliste erzeugt, die den zweiten Einstellwert anzeigt, der nicht in der Einstellwert-Speichereinheit (126) unter den zweiten Einstellwerten eingestellt ist, die in der Einstellinformationsdatei eingeschlossen sind; und
eine Anzeigeeinheit (121), die die Aktualisierungsfehlerliste anzeigt.

7. Informationsverarbeitungsvorrichtung nach einem der Ansprüche 1 bis 6, außerdem umfassend:
eine Erzeugungseinheit (142), die eine zweite Einstellinformationsdatei erzeugt, die die in der Identifikationsinformations-Speichereinheit (128) gespeicherte Einrichtungsidentifikationsinformation einschließt und die in der Einstellwert-Speichereinheit (126) gespeicherten ersten Einstellwerte einschließt; und
eine Ausgabeeinheit (142), die die zweite Einstellinformationsdatei ausgibt.

8. Informationsverarbeitungsvorrichtung nach Anspruch 7, worin
die Einstellwert-Speichereinheit (126) außerdem zweite Benutzeridentifikationsinformation zum Identifizieren eines Benutzers darin speichert, der eine Ausleseberechtigung zum Auslesen des ersten Einstellwerts hat, wobei die zweite Benutzeridentifikationsinformation in Verbindung mit dem ersten Einstellwert gespeichert ist,
die Informationsverarbeitungsvorrichtung außerdem einschließt:
eine Ausleseempfangseinheit (121), die eine Eingabe der zweiten Benutzeridentifikationsinformation eines Benutzers und eine Ausleseanweisung empfängt, die eine Auslesung der Einstellinformationsdatei an eine Außenseite vom Benutzer anweist, und
eine zweite Berechtigungsbeurteilungseinheit (145), die die zusammen mit der Ausleseanweisung empfangene zweite Benutzeridentifikationsinformation mit der zweiten Benutzeridentifikationsinformation vergleicht, die mit dem ersten Einstellwert in der Einstellwert-Speichereinheit (126) assoziiert ist, und beurteilt, ob der Benutzer die Ausleseberechtigung hat, den ersten Einstellwert auszulesen, wenn die Ausleseempfangseinheit (121) die Ausleseanweisung empfängt, und
die Erzeugungseinheit (142) die zweite Einstellinformationsdatei erzeugt, die die Einrichtungsidentifikationsinformation und den ersten Einstellwert einschließt, wenn die zweite Berechtigungsbeurteilungseinheit (145) beurteilt, dass der Benutzer die Ausleseberechtigung hat.

9. Informationsverarbeitungsvorrichtung nach Anspruch 7 oder 8, worin
die Erzeugungseinheit (142) die zweite Einstellinformationsdatei erzeugt, die den ersten Einstellwert, die mit dem ersten Einstellwert assoziierte Einstellbereichsinformation und die Einrichtungsidentifikationsinformation einschließt.

10. Informationsverarbeitungsvorrichtung nach einem der Ansprüche 7 bis 9, worin
die Einstellwert-Speichereinheit (126) außerdem Datentypinformation darin speichert, wobei es sich um Information handelt, die einen Datentyp des ersten Einstellwerts in Verbindung mit dem ersten Einstellwert anzeigt,
die Erzeugungseinheit (142) die zweite Einstellinformationsdatei erzeugt, die den ersten Einstellwert, die mit dem ersten Einstellwert assoziierte Datentypinformation und die Einrichtungsidentifikationsinformation einschließt.

11. Informationsverarbeitungsvorrichtung nach einem der Ansprüche 7 bis 10, worin
die Einstellwert-Speichereinheit (126) außerdem Anwendungsinformation darin speichert, die eine Anwendung des ersten Einstellwerts in Verbindung mit dem ersten Einstellwert anzeigt,
die Erzeugungseinheit (142) die zweite Einstellinformationsdatei erzeugt, die den ersten Einstellwert, die Anwendungsinformation, die mit dem ersten Einstellwert assoziiert ist, und die Einrichtungsidentifikationsinformation einschließt.

12. Informationsverarbeitungsvorrichtung nach einem der Ansprüche 7 bis 11, worin
die Einstellinformationsdatei aus Daten in einem editierbaren Format besteht, und
die Informationsverarbeitungsvorrichtung außerdem einschließt:
eine Änderungsempfangseinheit (121), die eine Änderungsanweisung des ersten Einstellwerts oder des zweiten Einstellwerts empfängt, die in der Einstellinformationsdatei vom Benutzer eingeschlossen sind, und
eine Editiereinheit (142), die den ersten Einstellwert oder den zweiten Einstellwert, die in der Einstellinformationsdatei eingeschlossen sind, in Übereinstimmung mit der Änderungsanweisung editiert.

13. Informationsverarbeitungsvorrichtung nach einem der Ansprüche 7 bis 12, worin
die Ausgabeeinheit (142) die zweite Einstellinformationsdatei an ein Aufzeichnungsmedium oder eine andere Einrichtung über ein Netz ausgibt.

14. Informationsverarbeitungsvorrichtung nach einem der Ansprüche 7 bis 13, außerdem umfassend:
eine Anzeigeeinheit (121), die eine Vielzahl der ersten Einstellwerte anzeigt, die in der Einstellwert-Speichereinheit (126) gespeichert sind; und
eine Auswahlempfangseinheit (121), die eine Auswahl des ersten Einstellwerts empfängt, der vom Benutzer aus den ersten Einstellwerten gewünscht wird, die auf der Anzeigeeinheit (121) gemäß der Eingabe durch den Benutzer gezeigt werden, worin
die Erzeugungseinheit (142) die zweite Einstellinformationsdatei erzeugt, die den ersten Einstellwert, dessen Auswahl von der Auswahlempfangseinheit (121) empfangen wird, und die Einrichtungsidentifikationsinformation einschließt.

## Revendications

1. Appareil de traitement d'informations (100) qui effectue le traitement d'informations en utilisant une pluralité de premières valeurs de paramétrage, l'appareil comprenant :
une unité de mémorisation d'informations d'identification (128) conçue pour mémoriser dans celle-ci des informations d'identification de dispositif pour identifier l'appareil de traitement d'informations ;
une unité de mémorisation de valeur de paramétrage (126) conçue pour mémoriser dans celle-ci les premières valeurs de paramétrage utilisées dans l'appareil de traitement d'informations, des informations uniques indiquant si la première valeur de paramétrage peut être fixée pour un dispositif différent de l'appareil de traitement d'informations, et des informations de plage de paramétrage indiquant une plage de paramétrage de la première valeur de paramétrage d'une manière associée ;
une unité d'obtention de fichier (142) conçue pour obtenir un fichier d'informations de paramétrage qui comprend des deuxièmes valeurs de paramétrage, des informations de plage de paramétrage indiquant une plage de paramétrage de la deuxième valeur de paramétrage et des informations d'identification de dispositif pour identifier un émetteur du fichier d'informations de paramétrage ;
une unité de comparaison (142) conçue pour comparer les informations d'identification de dispositif incluses dans le fichier d'informations de paramétrage et les informations d'identification de dispositif mémorisées dans l'unité de mémorisation d'informations d'identification (128) ;
une unité de comparaison de plage (142) conçue pour comparer les informations de plage de paramétrage associées à la deuxième valeur de paramétrage avec les informations de plage de paramétrage associées à la première valeur de paramétrage ; et
une unité de mise à jour de valeur de paramétrage (142) conçue pour mettre à jour la première valeur de paramétrage avec laquelle les informations uniques mémorisées dans l'unité de mémorisation de valeur de paramétrage (126) ne sont pas associées à la deuxième valeur de paramétrage incluse dans le fichier d'informations de paramétrage, lorsque les informations d'identification de dispositif incluses dans le fichier d'informations de paramétrage ne correspondent pas aux informations d'identification de dispositif mémorisées dans l'unité de mémorisation d'informations d'identification (128), et pour mettre à jour la première valeur de paramétrage mémorisée dans l'unité de mémorisation de valeur de paramétrage (126) à la deuxième valeur de paramétrage incluse dans le fichier d'informations de paramétrage indépendamment des informations uniques lorsque la plage de paramétrage de la deuxième valeur de paramétrage est identique à ou incluse dans la plage de paramétrage de la première valeur de paramétrage.

2. Appareil de traitement d'informations selon la revendication 1, dans lequel
l'unité de mise à jour de valeur de paramétrage (142) met à jour les premières valeurs de paramétrage aux deuxièmes valeurs de paramétrage indépendamment des informations uniques, lorsque les informations d'identification de dispositif incluses dans le fichier d'informations de paramétrage correspondent aux informations d'identification de dispositif mémorisées dans l'unité de mémorisation d'informations d'identification (128).

3. Appareil de traitement d'informations selon la revendication 1 ou 2, dans lequel
l'unité de mémorisation de valeur de paramétrage (126) mémorise en outre dans celle-ci des premières informations d'identification d'utilisateur pour identifier un utilisateur qui est autorisé à mettre à jour la première valeur de paramétrage en association avec la première valeur de paramétrage,
l'appareil de traitement d'informations comprend en outre
une unité d'obtention d'informations d'identification d'utilisateur (141) qui obtient les premières informations d'identification d'utilisateur d'un utilisateur, et
une première unité de jugement d'autorité (145) qui compare les premières informations d'identification d'utilisateur obtenues par l'unité d'obtention d'informations d'identification d'utilisateur (141) avec les premières informations d'identification d'utilisateur mémorisées dans l'unité de mémorisation de valeur de paramétrage (126) et juge si l'utilisateur a une autorité de mise à jour pour mettre à jour la première valeur de paramétrage à la deuxième valeur de paramétrage, et
l'unité de mise à jour de valeur de paramétrage (142) met à jour la première valeur de paramétrage à la deuxième valeur de paramétrage lorsque la première unité de jugement d'autorité (145) juge que l'utilisateur a l'autorité de mise à jour.

4. Appareil de traitement d'informations selon l'une quelconque des revendications 1 à 3, dans lequel
l'unité de mémorisation de valeur de paramétrage (126) mémorise en outre dans celle-ci des informations de type de données qui sont des informations indiquant un type de données de la première valeur de paramétrage en association avec la première valeur de paramétrage,
l'unité d'obtention de fichier (142) obtient le fichier d'informations de paramétrage qui comprend en outre des informations de type de données indiquant un type de données de la deuxième valeur de paramétrage et associées à la deuxième valeur de paramétrage,
l'appareil de traitement d'informations comprend en outre
une unité de comparaison de type de données (142) qui compare les informations de type de données associées à la deuxième valeur de paramétrage avec les informations de type de données associées à la première valeur de paramétrage, et
l'unité de mise à jour de valeur de paramétrage (142) met à jour la première valeur de paramétrage à la deuxième valeur de paramétrage lorsque le type de données de la première valeur de paramétrage correspond au type de données de la deuxième valeur de paramétrage.

5. Appareil de traitement d'informations selon l'une quelconque des revendications 1 à 4, dans lequel
l'unité de mémorisation de valeur de paramétrage (126) mémorise en outre dans celle-ci des informations d'application qui sont des informations indiquant une application de la première valeur de paramétrage en association avec la première valeur de paramétrage,
l'unité d'obtention de fichier (142) obtient le fichier d'informations de paramétrage qui comprend en outre des informations d'application indiquant une application de la deuxième valeur de paramétrage, les informations d'application étant associées à la deuxième valeur de paramétrage,
l'appareil de traitement d'informations comprend en outre
une unité de comparaison d'applications (142) qui compare les informations d'application associées à la deuxième valeur de paramétrage avec les informations d'application associées à la première valeur de paramétrage, et
l'unité de mise à jour de valeur de paramétrage (142) met à jour la première valeur de paramétrage à la deuxième valeur de paramétrage lorsque les informations d'application de la deuxième valeur de paramétrage correspondent aux informations d'application de la première valeur de paramétrage.

6. Appareil de traitement d'informations selon l'une quelconque des revendications 1 à 5, comprenant en outre :
une unité de création de liste d'échecs (142) qui crée une liste d'échecs de mise à jour qui indique la deuxième valeur de paramétrage qui n'est pas fixée dans l'unité de mémorisation de valeur de paramétrage (126) parmi les deuxièmes valeurs de paramétrage incluses dans le fichier d'informations de paramétrage ; et
une unité d'affichage (121) qui affiche la liste d'échecs de mise à jour.

7. Appareil de traitement d'informations selon l'une quelconque des revendications 1 à 6, comprenant en outre :
une unité de création (142) qui crée un deuxième fichier d'informations de paramétrage qui comprend les informations d'identification de dispositif mémorisées dans l'unité de mémorisation d'informations d'identification (128) et les premières valeurs de paramétrage mémorisées dans l'unité de mémorisation de valeur de paramétrage (126) ; et
une unité de sortie (142) qui délivre le deuxième fichier d'informations de paramétrage.

8. Appareil de traitement d'informations selon la revendication 7, dans lequel
l'unité de mémorisation de valeur de paramétrage (126) mémorise en outre dans celle-ci des deuxièmes informations d'identification d'utilisateur pour identifier un utilisateur qui a une autorité d'extraction pour extraire la première valeur de paramétrage, les deuxièmes informations d'identification d'utilisateur étant mémorisées en association avec la première valeur de paramétrage,
l'appareil de traitement d'informations comprend en outre
une unité de réception d'extraction (121) qui reçoit une entrée des deuxièmes informations d'identification d'utilisateur d'un utilisateur et une instruction d'extraction ordonnant une extraction du fichier d'informations de paramétrage vers l'extérieur de l'utilisateur, et
une deuxième unité de jugement d'autorité (145) qui compare les deuxièmes informations d'identification d'utilisateur reçues avec l'instruction d'extraction avec les deuxièmes informations d'identification d'utilisateur associées à la première valeur de paramétrage dans l'unité de mémorisation de valeur de paramétrage (126) et qui juge si l'utilisateur a l'autorité d'extraction pour extraire la première valeur de paramétrage lorsque l'unité de réception d'extraction (121) reçoit l'instruction d'extraction, et
l'unité de création (142) crée le deuxième fichier d'informations de paramétrage qui comprend les informations d'identification de dispositif et la première valeur de paramétrage lorsque la deuxième unité de jugement d'autorité (145) juge que l'utilisateur a l'autorité d'extraction.

9. Appareil de traitement d'informations selon la revendication 7 ou 8, dans lequel
l'unité de création (142) crée le deuxième fichier d'informations de paramétrage qui comprend la première valeur de paramétrage, les informations de plage de paramétrage associées à la première valeur de paramétrage, et les informations d'identification de dispositif.

10. Appareil de traitement d'informations selon l'une quelconque des revendications 7 à 9, dans lequel
l'unité de mémorisation de valeur de paramétrage (126) mémorise en outre dans celle-ci des informations de type de données qui sont des informations indiquant un type de données de la première valeur de paramétrage en association avec la première valeur de paramétrage,
l'unité de création (142) crée le deuxième fichier d'informations de paramétrage qui comprend la première valeur de paramétrage, les informations de type de données associées à la première valeur de paramétrage, et les informations d'identification de dispositif.

11. Appareil de traitement d'informations selon l'une quelconque des revendications 7 à 10, dans lequel
l'unité de mémorisation de valeur de paramétrage (126) mémorise en outre dans celle-ci des informations d'application indiquant une application de la première valeur de paramétrage en association avec la première valeur de paramétrage,
l'unité de création (142) crée le deuxième fichier d'informations de paramétrage qui comprend la première valeur de paramétrage, les informations d'application associées à la première valeur de paramétrage, et les informations d'identification de dispositif.

12. Appareil de traitement d'informations selon l'une quelconque des revendications 7 à 11, dans lequel
le fichier d'informations de paramétrage consiste en des données en un format éditable, et
l'appareil de traitement d'informations comprend en outre
une unité de réception de modification (121) qui reçoit une instruction de modification de la première valeur de paramétrage ou de la deuxième valeur de paramétrage incluse dans le fichier d'informations de paramétrage de l'utilisateur, et
une unité d'édition (142) qui édite la première valeur de paramétrage ou la deuxième valeur de paramétrage incluse dans le fichier d'informations de paramétrage conformément à l'instruction de modification.

13. Appareil de traitement d'informations selon l'une quelconque des revendications 7 à 12, dans lequel
l'unité de sortie (142) délivre le deuxième fichier d'informations de paramétrage à un support d'enregistrement ou à un autre dispositif par l'intermédiaire d'un réseau.

14. Appareil de traitement d'informations selon l'une quelconque des revendications 7 à 13, comprenant en outre :
une unité d'affichage (121) qui affiche une pluralité des premières valeurs de paramétrage mémorisées dans l'unité de mémorisation de valeur de paramétrage (126) ; et
une unité de réception de sélection (121) qui reçoit une sélection de la première valeur de paramétrage souhaitée par l'utilisateur parmi les premières valeurs de paramétrage affichées sur l'unité d'affichage (121), conformément à une entrée de l'utilisateur, dans lequel
l'unité de création (142) crée le deuxième fichier d'informations de paramétrage qui comprend la première valeur de paramétrage dont la sélection est reçue par l'unité de réception de sélection (121) et les informations d'identification de dispositif.
